(19) Europäisches Patentamt
European Patent Office
Office européen des brevets

(11) **EP 1 499 508 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(21) Anmeldenummer: **03718789.5**

(22) Anmeldetag: **25.04.2003**

(51) Int Cl.:
***B60C 23/04*** *(2006.01)*

(86) Internationale Anmeldenummer:
**PCT/EP2003/004329**

(87) Internationale Veröffentlichungsnummer:
**WO 2003/091046 (06.11.2003 Gazette 2003/45)**

(54) **VERFAHREN ZUR ÜBERWACHUNG EINES FAHRZEUGREIFENS ODER EINES FAHRZEUGEINSTELLPARAMETERS; VERFAHREN ZUM ERZEUGEN EINES FAHRZEUG-REIFEN-INTERAKTIONSMODELLS ODER FAHRZEUG-REIFEN-ZUVERLÄSSIGKEITSKENNFELDES; REIFENDIAGNOSESYSTEM; FAHRZEUGDIAGNOSESYSTEM**

METHOD FOR MONITORING A VEHICLE TIRE OR A VEHICLE ADJUSTMENT PARAMETER; METHOD FOR GENERATING A VEHICLE-TIRE -INTERACTION MODEL, OR A VEHICLE-TIRE-RELIABILITY MAP; TIRE DIAGNOSTIC SYSTEM; VEHICLE DIAGNOSTIC SYSTEM

PROCEDE POUR SURVEILLER UN PNEU D'UN VEHICULE; PROCEDE POUR GENERER UN MODELE D'INTERACTION VEHICULE-PNEU OU UNE CARACTERISTIQUE DE FIABILITE VEHICULE-PNEU; SYSTEME DE DIAGNOSE DU PNEU; SYSTEME DE DIAGNOSE DU VEHICULE

(84) Benannte Vertragsstaaten:
**AT BE BG CH CY CZ DE DK EE ES FI FR GB GR HU IE IT LI LU MC NL PT RO SE SI SK TR**

(30) Priorität: **26.04.2002 DE 10218781**

(43) Veröffentlichungstag der Anmeldung:
**26.01.2005 Patentblatt 2005/04**

(73) Patentinhaber: **TÜV SÜD Automotive GmbH**
**80339 München (DE)**

(72) Erfinder:
• **SCHICK, Bernhard**
**76199 Karlsruhe (DE)**

• **NETSCH, Lars**
**82296 Schöngeising (DE)**

(74) Vertreter: **Kramer - Barske - Schmidtchen**
**European Patent Attorneys**
**Patenta**
**Radeckestrasse 43**
**81245 München (DE)**

(56) Entgegenhaltungen:
**DE-A- 4 009 540       DE-A- 10 007 558**
**US-A- 4 909 074**

## Beschreibung

Die Erfindung betrifft ein Verfahren zur Überwachung eines Fahrzeugreifens, ein Verfahren zur Überwachung wenigstens eines der Fahrzeugeinstellparameter Sturz oder Spur, ein Verfahren zum Erzeugen eines Fahrzeug-Reifen-Interaktionsmodells und ein Verfahren zum Erzeugen eines Fahrzeug-Reifen-Zuverlässigkeitskennfeldes. Zusätzlich betrifft die Erfindung ein Reifendiagnosesystem und ein Fahrzeugdiagnosesystem.

Die Reifen der Fahrzeugräder vermitteln den Kontakt zwischen der Fahrbahn und dem Fahrzeug. Ihnen kommt für die Sicherheit und den Komfort des Fahrzeugs entscheidende Bedeutung zu. Der Reifen ist ein komplexes Bauteil, dessen Lebensdauer von zahlreichen Einflussgrößen abhängt. Eine kritische Größe für den Reifenzustand ist insbesondere die Temperatur in der Reifenschulter, das heißt im Bereich des Übergangs zwischen der Seitenwand und der Lauffläche. Dort erfolgen bei Überbeanspruchung infolge zu hoher Fahrzeugbeladung, hoher Seitenkräfte oder zu niedrigen Luftdrucks starke Verformungen, die zu hohen Temperaturen führen. Werden bestimmte kritische Temperaturen überschritten, so erfolgt eine irreversible Schädigung des Reifens, die zu dem Verlust seiner Funktionstüchtigkeit führen kann. Maßgeblich dafür können sowohl fehlerhafte Reifenparameter sein, wie zu niedriger Luftdruck, als auch fehlerhafte Fahrzeugparameter, wie fehlerhafte Einstellung von Sturz oder Spur.

Aus der DE-A-100 07 558, von der im Oberbegriff des Anspruchs 1 ausgegangen wird, sind eine Vorrichtung und ein System zur Ermittlung des Sollwertes des Reifenluftdrucks und des Reifenzustandes für ein Kraftfahrzeug bekannt. In einem Mikrocomputer sind aus Versuchen ermittelte Kennfelder abgelegt, die beispielsweise eine zeitliche Temperaturänderung im Reifen abhängig von der Fahrtgeschwindigkeit und der Fahrzeugbeschleunigung angeben. Weiter sind im Mikrocomputer Sollwerte des Reifenluftdruckes und ein mathematisches Fahrwerksmodell abgelegt, um beispielsweise bei hoher Beladung einen Hinweis auf eine Druckerhöhung im Reifen geben zu können oder bei starken Federausschlägen eine Absenkung des Reifenluftdrucks vorzuschlagen. Als Eingangsgrößen werden dem Mikrocomputer der aktuelle Reifendruck, die Reifenlufttemperatur, die Fahrzeuggeschwindigkeit, die Felgentemperatur, der Federweg, die Gierrate und die Seitenbeschleunigung zugeleitet. Der Mikrocomputer gibt den Sollreifenluftdruck sowie ein Warnsignal bei unzulässig hoher Abweichung zwischen IST- und SOLL-Druck ab. Außerdem kann bei an der Verschleißgrenze befindlichem Reifen eine Aquaplaning-Warnung sowie die erwartete Restlebensdauer angezeigt werden.

Auf ein konkretes Reifensschädigungsmodell finden sich keine Hinweise. Ebenso fehlt jeder Hinweis auf die Berücksichtigung von Fahrzeugeinstellpararnetern, wie Sturz oder Spur.

Die DE 40 09 540 A beschreibt ein Verfahren und ein System zur Reifendrucküberwachung, bei dem das vertikale Schwingungsverhalten einzelner Fahrzeugräder gemessen und analysiert wird. Es werden Eigenfrequenzen der radialen Bewegung ermittelt, aus denen auf die Federrate und daraus unter Berücksichtigung fahrzeugspezifischer Messdaten, wie Fahrzeuggeschwindigkeit, Beladung, Schräglauf, Sturz, Temperatur auf den Reifendruck geschlossen wird. Der augenblickliche Reifendruck wird mit einem Reifendruck-Sollwert verglichen. Bei markanten Abweichungen wird ein Warnsignal ausgelöst.

Der Erfindung liegt die Aufgabe zugrunde, die Möglichkeiten moderner Mess- und Rechentechnik sowohl für die Fahrzeugüberwachung als auch für die Entwicklung zu nutzen, indem relevante Parameter je nach Aufgabenstellung gemessen und in theoretischen Modellen verknüpft werden, so dass unterschiedlichste Aussagen zu Diagnose- und/ oder Prognosezwecken möglich sind.

Eine erste Lösung der Erfindungsaufgabe wird mit einem Verfahren gemäß dem Anspruch 1 erzielt.

Mit dem erfindungsgemäßen Verfahren ist es möglich, lediglich durch Messung von Betriebspararnetern einen für die Schädigung des Reifens relevanten Reifenschädigungsparameter, nämlich die im Bereich des Übergangs zwischen Seitenwand und Lauffläche des Reifens herrschende Temperatur zu bestimmen, ohne diese selbst messen zu müssen, und anhand des Reifenschädigungsmodells, das ein Integral des Reifenschädigungsparameters enthält, eine Reifenschädigungskenngröße zu ermitteln, die eine sichere Aussage über den Zuverlässigkeitszustand des Reifens und dessen voraussichtliche weitere Lebensdauer erlaubt.

Der Anspruch 2 ist auf eine vorteilhafte Durchführungsform des erfindungsgemäßen Verfahrens gerichtet.

Eine weitere Lösung der Erfindungsaufgabe wird mit dem Verfahren gemäß dem Anspruch 3 erzielt. Bei diesem Verfahren werden wenigstens ein Reifenschädigungsparameter und wenigstens ein Fahrzeugbetriebsparameter gemessen und anhand des fahrzeug- und reifenspezifischen Diagnosemodells wird daraus der Wert von Sturz und/oder Spur berechnet, um auf fehlerhafte Fahrzeugeinstellungen schließen zu können.

Die Unteransprüche 4 bis 6 geben vorteilhafte Durchführungsformen des Verfahrens gemäß Anspruch 3 an.

Die Merkmale des Anspruchs 7 sind vorteilhaft für die Verfahren gemäß Anspruch 1 und 3 einsetzbar.

Eine weitere Lösung der Erfindungsaufgabe wird mit den Merkmalen des Anspruchs 8 erzielt. Ein solches Fahrzeug-Reifen-Interaktionsmodell stellt ein vorteilhaftes Entwicklungswerkzeug dar, mit dem der Einfluss unterschiedlichster Größen abgeschätzt werden kann, bevor ein Fahrzeug tatsächlich gebaut wird. Das reale reifen- und fahrzeugspezifische Kennfeld wird beispielsweise versuchstechnisch ermittelt, indem die in der Reifenflanke herrschende Temperatur für verschiedene Werte von Fahrzeugeinstellparametern, beispielsweise Sturz und Spur, verschiedene Werte von Fahrzeugbetriebsparametern, beispielsweise die Fahrzeuggeschwindigkeit, verschiedene Werte von Reifeneinstellparametern, beispielsweise dem Fülldruck des Reifens, und verschiedene Reifentypen ermittelt wird. Als Ergebnis ergibt sich ein Temperaturkennfeld, das die Temperatur in Abhängigkeit von den genannten Größen angibt. Ein ähnliches Kennfeld kann virtuell durch Modellberechnungen errechnet werden. Durch Zusammenfügen beider Kennfelder können die im virtuellen Kennfeld enthaltenen Parameter adaptiert werden, so dass das Fahrzeug-Reifen-Interaktionsmodell, das die Wechselwirkungen aller eingehenden Größen enthält, sowohl rein theoretische Vorhersagen ermöglicht, als auch Aussagen ermöglicht, die nur geringe versuchstechnische Unterstützung benötigen.

Die Merkmale des Anspruchs 9 bilden das Verfahren gemäß Anspruch 8 vorteilhaft weiter.

Eine weitere Lösung der Erfindungsaufgabe wird mit den Merkmalen des Anspruchs 10 erzielt. Mit diesem Verfahren ist eine Vorhersage über den Reifenlebensdauer je nach Lastkollektiv, in dem ein Fahrzeug betrieben wird, möglich.

Der Anspruch 11 ist auf ein Reifendiagnosesystem gerichtet, mit dem die Verfahren gemäß den Ansprüchen 1, 2 oder 7 in Verbindung mit einem der Ansprüche 1 oder 2 durchführbar sind.

Der Anspruch 12 ist auf ein Fahrzeugdiagnosesystem gerichtet, mit dem Sturz und/oder Spur anhand eines Diagnosemodells durch Messung von Reifenbetriebsparametern, wie beispielsweise Luftdruck und Temperatur, bestimmt werden können.

Die Erfindung wird im folgenden anhand schematischer Zeichnungen beispielsweise und mit weiteren Einzelheiten erläutert.

In den Figuren stellen dar:

| Fig. 1 | einen Halbquerschnitt durch einen auf einer Felge montierten Fahrzeugreifen, |
| Fig. 2 | schematisch den Einfluss von Temperatur und Zeit auf die Schädigung eines Reifens, |
| Fig. 3 | Einflussgrößen auf ein Diagnosemodell, |
| Fig. 4 | eine Skizze zur Erläuterung der Funktion eines erfindungsgemäßen Diagnosesystems, |
| Fig. 5 und Fig. 6 | ein Blockdiagramm eines Diagnosesystems, |
| Fig. 7 | einen Halbquerschnitt durch einen auf einer Felge montierten, gegenüber dem der Fig. 1 abgeänderten Fahrzeugreifen mit Teilen eines Fahrzeugüberwachungssystems, |
| Fig. 8 | schematisch eine Möglichkeit, Daten vom Reifen auszulesen, |
| Fig. 9 - 11 | Aufsichten auf Teile eines abgewickelten Sensornetzes, |
| Fig. 12 | schematisch einen Sensor und |
| Fig. 13 | schematisch eine autarke Sensoreinheit. |

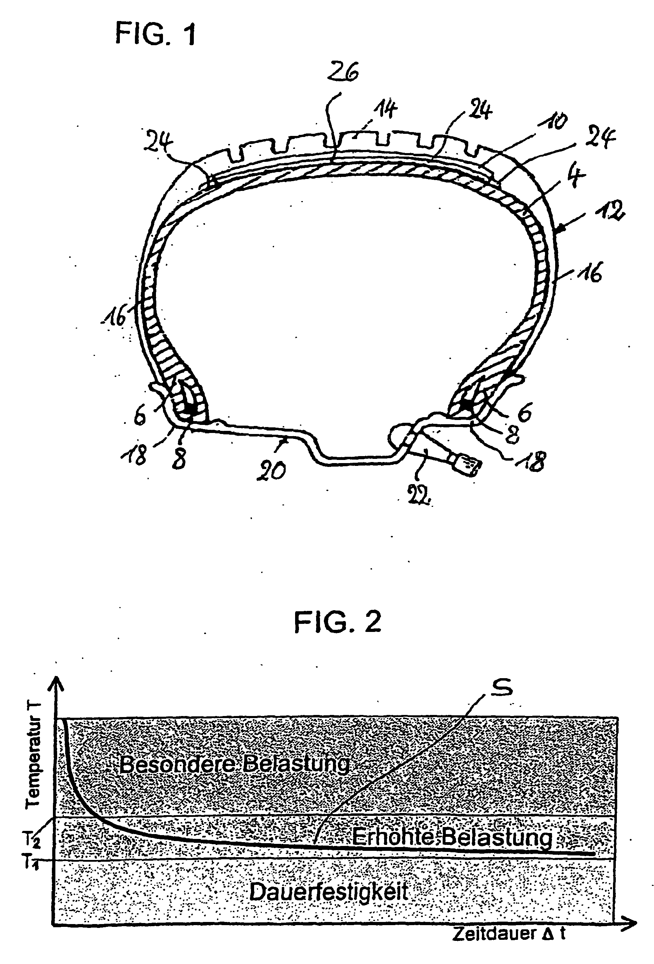

Fig. 1 zeigt einen Querschnitt durch einen an sich bekannten Reifen in Radialbauweise, der eine Karkasse 4 aufweist, die beispielsweise aus zwei radial verlaufenden Lagen aus Rayon-Fäden zusammengesetzt ist und radial einwärts in Wülsten 6 endet. Auf dem radial äußeren Bereich der Karkasse 4 ist ein Gürtel 10 angeordnet, der beispielsweise aus zwei gekreuzten Lagen von Stahlfäden und zwei umlaufenden Lagen von Nylonfäden besteht. Über die Karkasse bzw. den Gürtel 10 ist eine Gummischicht 12 vulkanisiert, die im radial äußeren Bereich den Laufstreifen 14 bildet und im seitlichen Bereich zu verhältnismäßig dünnen Seitenwänden 16 gehört. Die Wülste 6 sind in Schultern 18 einer Felge 20 aufgenommen, die Bestandteil eines nicht dargestellten Rades ist. Der Reifen ist luftdicht, so dass sein Inneres über ein in die Felge eingesetztes Ventil 22 mit Druckluft beaufschlagt werden kann. Die Konstruktion ist nur beispielsweise. Die nachfolgend geschilderte Erfindung kann für Reifen unterschiedlichster Bauart verwendet werden.

Die Reifenhaltbarkeit ist einmal gegeben durch Abrieb des Materials des Laufstreifens 14, abhängig von der Fahrstrecke, den Belastungen und dem Luftdruck. Der Verschleiß des Laufstreifens 14 kann visuell problemlos erkannt werden. Problematischer sind von außen nicht ohne weiteres erkennbare Schädigungen des Reifens, die im wesentlichen von der im Reifen durch Verlustleistung umgesetzten Wärme abhängig sind. Besonders kritisch sind dabei Temperaturen im Bereich der seitlichen Ränder des Gürtels 10, die in der Regel die höchsten im Reifen auftretenden Temperaturen sind. Grund dafür ist, dass dort unterschiedliche Elemente des Reifens, wie Gürtel, Karkasse, Seitenwand, Laufstreifen, zusammenkommen und sich bei einer Verformung des Reifens relativ zueinander verschieben. Hohe Temperaturen in diesem Bereich können je nach Höhe und Dauer zu Materialschädigungen oder sogar Ablösungen führen, die den Reifen irreversibel schädigen.

Für eine Diagnose des Reifens ist es daher zweckmäßig, die Temperatur insbesondere im Bereich der Ränder der. Schulter 10 direkt oder indirekt zu bestimmen. Eine direkte Bestimmung ist dadurch möglich, dass im Bereich der Gürtelränder wenigstens ein Temperatursensor 24 angebracht wird, der beispielsweise mit einem im Reifen angeordneten Transponder verbunden ist, über den der Temperaturwert berührungslos nach außen übertragen werden kann und von einer fahrzeugfesten Antenne aufgenommen werden kann.

Zusätzlich zu Temperatursensoren 24 können in einem insgesamt mit 26 bezeichneten Bereich zwischen Gürtel 10 und Karkasse 4 weitere Sensoren angeordnet sein, die beispielsweise mechanische Verformungen des Reifens im Bereich der Lauffläche, die Temperatur der Lauffläche, den Luftdruck innerhalb des Reifens, die Anzahl der Umdrehungen des Reifens usw. erfassen und deren Messwerte in an sich bekannter Weise berührungslos nach außen übertragen werden können. Die Energieversorgung der zugehörigen Transponder kann in an sich bekannter Weise berührungslos elektromagnetisch von außen her erfolgen.

Fig. 2 verdeutlicht den Einfluss der im Bereich der Gürtelränder bzw. dem Übergang zwischen Lauffläche und Seitenwand in der Reifenschulter gemessenen Temperatur T auf die Reifenschädigung. Die Kurve S gibt eine Schädigung an, die zu einem gravierenden Funktionsmangel des Reifens führt, d.h. zu einem Reifen, der gewechselt werden muss. Wenn eine Temperatur $T_1$ überschritten wird, so bedeutet dies eine erhöhte Belastung des Reifens, die bei genügend langer Einwirkdauer $\Delta t$ zum Erreichen der zulässigen Schädigung führt. Die zulässige Einwirkdauer nimmt mit zunehmender Temperatur ab. Wenn eine Temperatur $T_2$ überschritten wird, so liegt eine besondere Belastung des Reifens vor, die bereits nach verhältnismäßig kurzer Zeitdauer At zu einem Ausfall des Reifens führt. Für eine Überwachung des Reifens ist es daher erforderlich, die Temperaturen und deren Zeitdauern zu kennen, wobei die einzelnen Schädigungsanteile integral wirken, d.h. sich zu einer Gesamtschädigung addieren.

Auf dem Prüfstand, durch Praxismessfahrten oder durch Modellrechnungen kann ein Reifenschädigungsmodell ermittelt werden, das beispielsweise einen Schädigungswert SW als Integral über die ggf. mit einem Gewichtungsparameter a(T) versehene Temperatur T über die jeweilige Zeitdauer, bei der die Temperatur vorhanden ist, definiert, wobei der Reifen irreversibel geschädigt ist, sobald dieser Schädigungswert einen Maximalwert übersteigt.

Es gilt:

$$ SW = \int a(T)\,T\,dt \qquad (1) $$

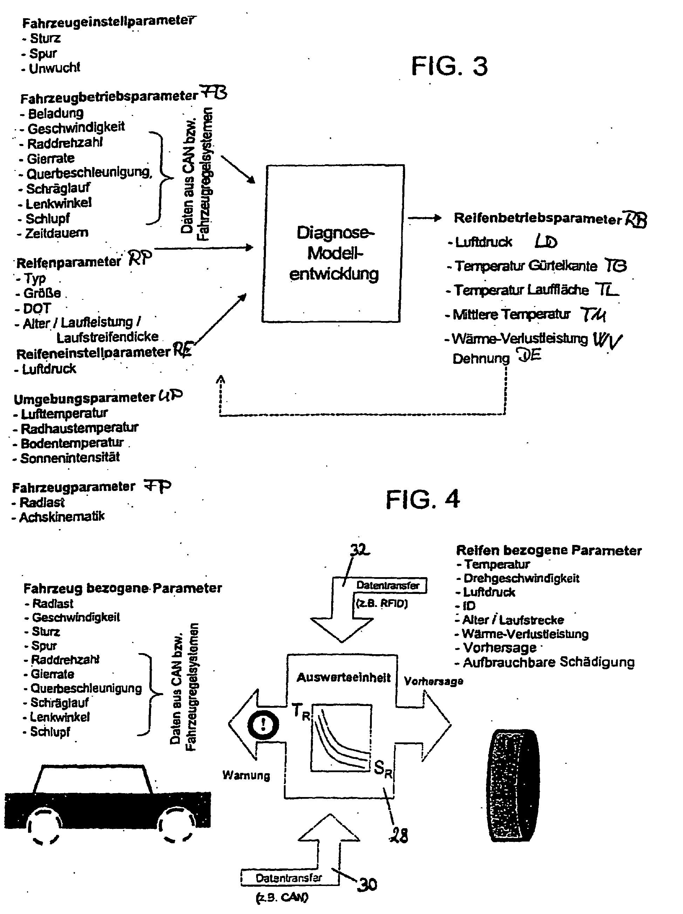

Insgesamt bestehen Abhängigkeiten und Wechselwirkungen zwischen einer Vielzahl von Parametern, die in Fig. 3 gesamthaft aufgeführt sind.

Der Verschleiß eines Reifens hängt zunächst von Fahrzeugparametern FP ab, die fahrzeugspezifisch sind und solche Größen angeben, wie beispielsweise die Radlast oder die Achskinematik, die Einfluss auf die Reifenbeanspruchung beim Einfedern, beim Einschlagen der Lenkung usw. hat. Weiter wird die Reifenbeanspruchung von Fahrzeugeinstellparametern beeinflusst, wie Einstellung des Sturzes, der Spur oder einer Unwucht.

Einfluss auf die Reifenbeanspruchung haben weiter Fahrzeugbetriebsparameter FB, die den Betrieb des jeweiligen Fahrzeugs kennzeichnen, wie Beladung, Geschwindigkeit, Raddrehzahl, Gierrate, Querbeschleunigung, Schräglauf, Lenkwinkel und Schlupf.

Zusätzlich hängt der Reifenverschleiß von Fahrzeugeinstellparametern FE, wie Sturz, Spur, Unwucht, ab.

Weiter hängt der Reifenverschleiß vom jeweiligen Reifen selbst ab, dessen Parameter RP in ein Reifenverschleiß- bzw. Diagnosemodell als Typ, Größe, DOT sowie das Alter des Reifens und dessen bereits zurückgelegte Laufleistung eingehen.

Als Reifeneinstellparameter RE beeinflusst der Luftdruck bzw. der Reifenfülldruck den Verschleiß des Reifens, der beispielsweise an einer Luftnachfüllstation entsprechend der Betriebsanleitung des Fahrzeugs eingestellt wird.

Des weiteren haben die Umgebungsparameter UP Einfluss auf den Reifenverschleiß, wie Lufttemperatur, Radhaustemperatur, Boden- bzw. Fahrbahntemperatur, Sonnenintensität usw.

Aus den genannten Parametern kann anhand von Modellrechnungen und/oder Fahrversuchen ein Diagnosemodell hergeleitet werden, das den Reifenverschleiß und/oder dessen Schädigung unmittelbar berechnet und/oder aus dem Größen berechenbar sind, die für die Reifenschädigung maßgeblich sind, wie Temperatur der Gürtelkante, Temperatur der Lauffläche, mittlere Reifentemperatur, im Reifen umgesetzte Wärme-Verlustleistung, sich dynamisch im Reifen einstellender Luftdruck und Dehnung bzw. mechanische Beanspruchung des Reifens. Die rechtsseitigen Reifenbetriebsparameter RP können aus den linksseitigen Parametern anhand von Modellrechnungen, die gegebenenfalls mit Prüfstandsversuchen validiert werden oder aus Prüfstandsversuchen hergeleitet werden, berechnet werden:

$$ RP = f(FE,\ FB,\ RP,\ RE,\ UP,\ FP) \qquad (2) $$

Insgesamt ergibt sich ein Diagnosemodell, das in Form eines Gleichungssystems und/oder Kennfeldern unterschiedlichste Abhängigkeiten angibt. Einzelne der linksseitigen und rechtsseitigen Parameter sind dabei nicht unabhängig voneinander, beispielsweise beeinflussen Sturz- und Spureinstellung den Schräglauf oder die Temperaturen des Reifens den Luftdruck und die Wärmeverlustleistung. Die Laufstreifendicke kann aus der Laufleistung und den Bedingungen, unter denen diese zurückgelegt wurde, berechnet werden und/oder von Zeit zu Zeit unmittelbar gemessen werden.

Aus den Reifenbetriebsparametern RP kann anhand einer Beziehung ähnlich der Formel (1), nämlich

$$SW = \int b(RP)RP\,dt \qquad (3)$$

der Schädigungswert SW berechnet werden.

Einige der errechneten Reifenbetriebsparameter können zusätzlich unmittelbar am Reifen mittels Sensoren, wie anhand der Fig. 1 erläutert, gemessen werden und im Diagnosemodell mit den errechneten Werten verglichen werden, so dass eine Adaptierung des Diagnosemodells möglich ist.

Das Diagnosemodell, das in Form von Kennfeldern, Algorithmen usw. die Zusammenhänge zwischen den einzelnen Werten der Parameter angibt, kann in beide Richtungen genutzt werden. Wenn die in Fig. 3 links stehenden Parameterwerte bekannt sind, kann der Reifenverschleiß und/oder ein Schädigungswert des Reifens berechnet werden, wobei das Erreichen eines kritischen Schädigungswertes angezeigt werden kann. Umgekehrt können die in Fig. 3 rechts stehenden Parameterwerte gemessen oder indirekt bestimmt werden, so dass aus dem Diagnosemodell auf linksseitige Parameter, insbesondere beispielsweise die Fahrzeugeinstellparameter Sturz und Spur geschlossen werden kann, so dass Fehler am Fahrzeug aus dem Diagnosemodell und der Messung der Reifenbetriebsparameter sowie weiterer Fahrzeugbetriebsparameter und ggf. von Umgebungsparametern erkannt werden, angezeigt werden und korrigiert werden können.

Auch Mischformen sind möglich, wobei ein Teil der links- und rechtsseitigen Parameter gemessen und ein anderer Teil berechnet wird.

Das Diagnosemodell kann je nach Hardware-Aufwand (Anzahl der verwendeten Sensoren) und Software-Aufwand mehr oder weniger detailliert sein. Die Fahrzeugsbetriebsparameter sind insbesondere bei mit Fahrstabilitätssystemen ausgerüsteten Fahrzeugen ständig bekannt. Das gleiche gilt für die Reifenparameter und den Umgebungsparameter Lufttemperatur sowie für die Fahrzeugparameter, zu denen auch die Sollgrößen von Sturz und Spur gerechnet werden können. Aus diesen Daten können anhand des Diagnosemodells die Reifenbetriebsparameter berechnet werden, wobei es zur ständigen Überprüfung des Diagnosemodells zweckmäßig ist, wenigstens einen der Reifenbetriebsparameter am Reifen zu messen und mit dem errechneten Wert zu vergleichen. Im Diagnosemodell verwendete Konstanten oder Abhängigkeiten werden dann entsprechend adaptiert, so dass das Diagnosemodell und dessen Eingangsgrößen, beispielsweise die Laufleistung des Reifens, laufend aktualisiert werden. Je mehr rechtsseitige Reifenbetriebsparameter (Fig. 3) gemessen werden, beispielsweise zusätzlich zu den aufgeführten die Dehnung des Laufstreifens oder die Verformung der Seitenwand oder Reifenschulter, um so genauer kann aus dem Diagnosemodell umgekehrt auf fehlerhafte Sturz- und/oder Spureinstellung, auf Unwuchten des Rades bzw. Reifens oder auf andere Fahrzeugfehler geschlossen werden.

Fig. 4 verdeutlicht die Funktion eines Diagnosesystems, das mit dem Diagnosemodell der Fig. 3 arbeitet.

Linksseitig sind nur beispielhaft einige Fahrzeugparameter dargestellt. Rechtsseitig sind beispielhaft einige Reifenparameter aufgeführt. Die linksseitigen Parameter werden einer Auswerteeinheit 28, die in an sich bekannter Weise einen Mikroprozessor mit zugehörigen Speichereinrichtungen enthält, in denen das Diagnosemodell gespeichert ist, beispielsweise über einen Datenbus 30 zugeführt. Die Reifenparameter, wie Temperatur, Drehgeschwindigkeit des Reifens, ein Identifikationscode zum Identifizieren des Reifens werden der Auswerteeinheit 28 vom jeweiligen Reifen aus über eine berührungslos arbeitende Datentransferstrecke 32 zugeführt. Die Datentransferstrecke 32 kann beispielsweise nach dem RFID-Verfahren (Radio-Frequency-IDentifikation) erfolgen.

Je nach Aus- und Aufbau des Systems und Aufgabenstellung können in der Auswerteeinheit 28 Warnungen erzeugt werden, die auf fehlerhafte Fahrzeugeinstellparameter, wie Sturz, Spur oder auch einem verschlissenen oder bis zur Funktionsuntüchtigkeit geschädigten Reifen hinweisen. Weiter können bezüglich des Reifens Vorhersagewerte über die Restlaufzeit oder noch aufbrauchbare Schädigung erzeugt werden, damit sichergestellt ist, dass der Reifen rechtzeitig gewechselt wird.

Es versteht sich, dass die im Diagnosemodell errechneten Werte der reifenbezogenen Parameter, wie aufbrauchbare Schädigung, Verschleiß oder Laufstrecke, über die Datentransferstrecke 32 in den Reifen übertragen werden können und dort auf einem entsprechenden Speicherträger gespeichert werden können. Auf diese Weise trägt jeder Reifen seine für die Beurteilung relevanten Daten, die sofort ausgelesen werden können.

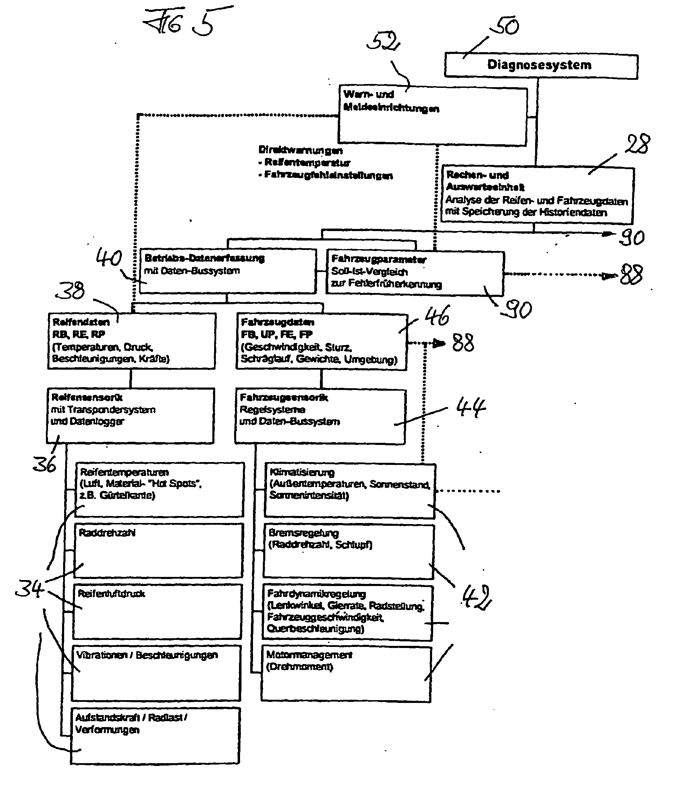

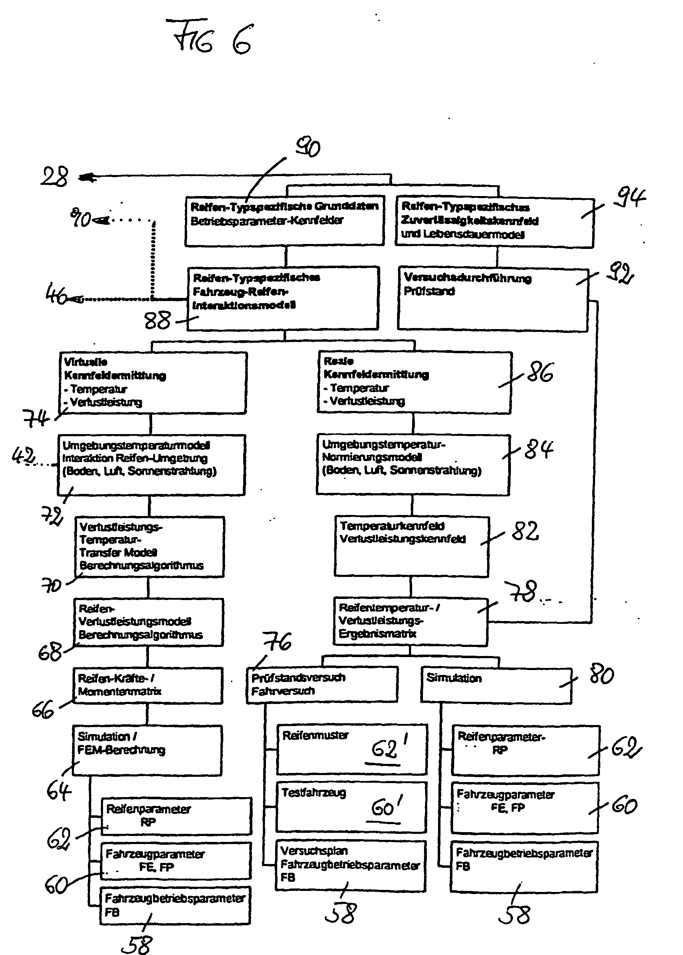

Die Figuren 5 und 6 zeigen ein Blockschaltbild eines Diagnosesystems in einer umfangreichen Aufbaustufe.

Mit Hilfe von Sensoren 34 werden Größen, wie Reifentemperaturen, Raddrehzahlen, Reifenluftdruck, Vibrationen beziehungsweise Beschleunigungen am Rad und/oder die Aufstandskraft, die Radlast und/oder Verformungen des Reifens erfasst und über ein insgesamt als Reifensensorik 36 bezeichnetes Datenübertragungssystem einer Reifendateneinheit 38 zugeführt, in der zumindest einige der Reifenbetriebsparameter RB in Fig. 3 und Reifeneinstellparameter RE ermittelt werden und die Reifenparameter RP gespeichert sind. Die ermittelten und gespeicherten Parameter werden einer Betriebsdateneinheit 40 zugeführt.

Mit Hilfe weiterer Sensoren 42 werden Größen erfasst, wie Außentemperaturen, der Sonnenstand, die Sonnenintensität, Raddrehzahlen und Schlupf, Fahrdynamik bezogene Größen, wie Lenkwinkel, Gierrate, Radstellung, Geschwindigkeit, Querbeschleunigung und Motordaten, wie das Drehmoment. Diese Daten werden über eine insgesamt als Fahrzeugsensorik 44 bezeichnete Datenübertragungseinrichtung einer Fahrzeugdateneinheit 46 zugeführt, in der alle oder einzelne der Fahrzeugbetriebsparameter FB (Fig. 3), Fahrzeugeinstellparameter FE, Fahrzeugparameter FP und Umgebungsparameter UP ermittelt, oder soweit fahrzeugspezifisch festgelegt, vorher gespeichert sind. Die genannten Parameter gelangen in die Betriebsdateneinheit 40, die mit der Rechen- und Auswerteeinheit 28 (siehe auch Fig. 4) verbunden ist.

Weiter weist das insgesamt mit 50 bezeichnete Diagnosesystem Warn- und Meldeeinrichtungen 52 auf, mit denen beispielsweise bei unzulässig hohen Temperaturen im Reifen unmittelbar Fehlmeldungen ausgelöst werden können.

Die Fig. 5 beschreibt vorwiegend den sensorischen Teil des Diagnosesystems. Fig. 6 beschreibt vorwiegend den simulationstechnischen Teil des Diagnosesystems 50.

In eine Fahrzeugbetriebsparametereinheit 58 werden Fahrzeugbetriebsparameter FB (Fig. 3) eingegeben. In eine Fahrzeugparametereinheit 60 werden die Fahrzeugparameter FE, FP eingegeben. In eine Reifenparametereinheit 62 werden die Reifenparameter RP eingegeben. Die genannten Parameter können ebenfalls bereits in der Reifendateneinheit 38 und der Fahrzeugdateneinheit 46 enthalten sein.

In einer Berechnungseinheit 64 werden aus den Daten der Einheiten 58, 60 und 62 mit Hilfe einer Modellrechnung die in den Reifen wirksamen Kräfte und Momente (66) berechnet, aufgrund derer in einem Reifenverlustleistungsmodell 68 die Verlustleistung und die Temperaturen des Reifens 70 berechnet werden.

In einem Umgebungstemperatuimodell 72, das über die gepunktete Leitung mit den Klimatisierungssensoren verbunden sein kann, werden die jeweiligen Umgebungsbedingungen berücksichtigt, so daß die in der Einheit 70 berechneten Größen korrigiert werden können und in der virtuellen Kennfeldeinheit 74 die Reifenverlustleistung und die Temperaturverteilung im Reifen aufgrund der angenommenen Modelle errechnet werden.

In einem zu den genannten Einheiten parallelen Zweig werden in einem Prüfstandsversuch 76 mit einem den Fahrzeugparameter entsprechenden Testfahrzeug 60' , das mit den Reifenparametern entsprechenden Reifen 62' ausgerüstet ist, Versuche gefahren, die den Fahrzeugbetriebsparametern entsprechen und die Verlustleistung und die Reifentemperaturverteilung (78) gemessen.

Eine unter Berücksichtigung der Fahrzeugbetriebs-, Fahrzeug- und Reifenparameter durchgeführte Simulationsrechnung (80), in der ebenfalls die Reifentemperaturen und die Verlustleistungen berechnet werden, kann anhand der Prüfstandsergebnisse adaptiert werden, wobei mit den Ergebnissen auch das in der Berechnungseinheit 64 zugrundegelegte Modell modifiziert werden kann.

Aus den Ergebnissen 78 kann anhand unterschiedlicher Versuche (76) und Simulationen (80) mit mehreren Fahrzeugen und Reifen ein Temperatur- und Verlustleistungskennfeld 78 bzw. 82 generiert werden, das unter Berücksichtigung der Umgebungsbedingungen (84) zu einem realen Temperatur- und Verlustleistungskennfeld (86) umgerechnet werden kann, wobei die realen Kennfelder der Einheit 86 im Gegensatz zu den virtuellen Kennfeldern der Einheit 74 aufgrund von Versuchsergebnissen ermittelt sind.

Die beiden Kennfelder werden in der Einheit 88 zu einem Interaktionsmodell zusammengefügt, das reifentypspezifische Daten mit fahrzeugspezifischen Daten verbindet.

In dem Interaktionsmodell 88 errechnete Daten können mit Daten aus der Fahrzeugbetriebsparametereinheit 46 ergänzt werden. In einer Vergleichseinheit 90 können Ist-Daten aus der Betriebsdateneinheit 40 mit errechneten Soll-Daten aus der Einheit 88 verglichen werden. Bei einer Abweichung kann unmittelbar eine Warnmeldung erzeugt werden.

Aus dem Interaktionsmodell 88 werden in einer Kennfeldeinheit 90 Kennfelder beziehungsweise Rechenalgorithmen generiert, die entsprechend reifentypspezifischen Grunddaten und Fahrzeugdaten die einzelnen Parameter miteinander verknüpfen. In weiteren Prüfstandsmessungen 92 werden unter Zuhilfenahme der Daten der Einheit 78 reifentypspezifische Zuverlässigkeits- und Lebensdauermodelle in der Einheit 94 hergeleitet, die zusammen mit den Kennfeldern der Einheit 90 der Rechen- und Auswerteeinheit 28 zugeführt werden, in der auf diese Weise alle Verknüpfungen vorliegen, die beispielsweise in den Gleichungssystemen 1, 2 und 3 enthalten sind.

Das beschriebene Diagnosesystem kann in vielfältiger Weise genutzt und abgeändert werden.

Das Reifentyp-spezifische Reifen-Fahrzeug-Interaktionsmodell 88, das gesamthaft die Funktion der Rechen- und Auswerteeinheit 28 bestimmt, kann vorwiegend virtuell (linker Ast der Fig. 6) oder vorwiegend unter Einsatz realer Versuche (rechter Ast der Fig. 6) oder durch Kombination beider Verfahren entwickelt werden.

Es erlaubt somit, über virtuell oder im realen Versuch ermittelte Kennfelder die Ermittlung der Reifentemperatur beziehungsweise der Verlustleistung, abhängig von bekannten oder gemessenen Reifenparametern (RP), Fahrzeugparametern (FE, FP), Fahrzeugbetriebsparametern (FB) und Umgebungsparametern (UP), über Schätzung beziehungsweise Berechnung. Gleichzeitig ist umgekehrt auch über eine bekannte Reifentemperatur beziehungsweise Verlustleistung die Errechnung beziehungsweise Schätzung eines der Parameter RP, FE, FP, FB möglich.

Durch Kombination der beiden Kennfelder beziehungsweise Modelle eröffnen sich unter anderem folgende Möglichkeiten und Verfahrensweisen:

- Im Rahmen der Fahrzeugentwicklung und Reifenentwicklung:

Die für eine bestimmte Fahrzeug-Reifen-Kombination bei verschiedenen Parametereinstellungen (Belastungen) vorhergesagten beziehungsweise errechneten Reifentemperaturen beziehungsweise Verlustleistungen können mit der unter diesen Bedingungen zu erwartenden Lebensdauer des entsprechenden Reifens verglichen werden (Schädigungsvergleich). Dadurch ergibt sich die Möglichkeit zur Beurteilung der Robustheit des Reifens im Vergleich zu den in Kombination mit einem bestimmten Fahrzeugtyp im Betrieb zu erwartenden Belastungen. In der Reifen- und Fahrzeugentwicklung kann somit die Auslegung von Reifen und die Abstimmung mit dem Fahrzeug bereits in sehr frühen Stadien berücksichtigt und getestet werden, insbesondere wenn virtuelle Methoden zur Bestimmung der Kennfelder eingesetzt werden, noch bevor das erste Fahrzeug- oder Reifenmuster verfügbar ist.

- Im Rahmen des Einsatzes von Simulationsmethoden:

Die Kennfeld- und modellgeschützte Entwicklung der Reifentemperatur und Verlustleistung, abhängig von den unterschiedlichen Einstellungs- und Betriebsparametern, ermöglicht die zur Simulation zeitgleicher Anpassung der temperaturabhängigen Reifeneigenschaften in Reifensimulationsmodellen, die sich mittelbar (z.B. bei Änderung des Innenluftdrukkes) oder unmittelbar (z.B. über Änderung der Steifigkeiten oder des Reibwertes) auf das Fahrverhalten und die Performance (Traktion oder Übertragung von Seitenkräften) auswirken.

Das Interaktionsmodell 88 kann somit nicht nur innerhalb des Diagnosesystems vorteilhaft eingesetzt werden. Es stellt auch ein Entwicklungsinstrument dar, das beispielsweise bei der Auslegung eines Reifens für bestimmte Fahrzeuge oder Fahrzeugtypen vorteilhaft eingesetzt werden kann, da sich abhängig von den Parametern des Reifens und des Fahrzeuges, mit denen Simulationsrechnungen und Prüfstandsversuche unter Zugrundelegen der Fahrzeugbetriebsparameter für die Reifenschädigung und damit die Haltbarkeit des Reifens relevante Parameter ermitteln lassen.

Das Reifen-Typspezifische Zuverlässigkeitskennfeld (Block 94) wird aus den Prüfstandsversuchen (Block 92) mit unter vorbestimmter Beanspruchung betriebenen Reifen ermittelt. Die in Fig. 6 enthaltene Verbindungslinie zu den Blöcken 78 und 92 deutet, wie weiter oben bereits ausgeführt, darauf hin, dass bei den Prüfstandsversuchen (Block 92) als Basis auf die Ergebnismatrix (Block 78) rückgegriffen werden kann. Das Reifen-Typspezifische Zuverlässigkeits-Kennfeld/Lebensdauermodell (Block 94) gibt analog zu einem Festigkeitskennfeld mechanischer Bauteile die auf die Betriebstemperatur als Belastungsgröße bezogene Lebensdauer des Reifens in Form von Kennlinien an, wie sie beispielsweise in Fig. 2 dargestellt sind. Somit sind bereits in der Entwicklungsphase eines Reifens präzise Aussagen über dessen Lebensdauer beziehungsweise Zuverlässigkeit möglich.

Unterschiedliche Parameter beziehungsweise Daten können mittels unterschiedlichster Methoden ermittelt werden.

Die Drehzahl eines Reifens kann direkt mit Hilfe der Reifensensorik oder indirekt über die Fahrzeugsensorik ermittelt werden.

Einzelne Parameter aus der Fahrzeugsensorik (Fahrdynamikregelung, Klimaregelung, Bremsregelung usw.), insbesondere Daten über die Umgebung (Sonnenstand undintensität, Aussenluft- und Bodentemperatur) können auch mit Hilfe von Schätzungen über bereits vorliegende Modelle gewonnen werden. Beispielsweise kann die Sonnenintensität, das heißt die eingestrahlte Leistung pro Flächeneinheit, aus einer Korrelation zwischen Boden- und Lufttemperatur anhand der Auswertung gespeicherter meteorologischer Datenarchive näherungsweise berechnet werden. Das Umgebungstemperaturmodell arbeitet auch ohne detailliert vorliegende Daten in der direkten Umgebung des Reifens mit einer ausreichend guten Näherung, bei der angenommen wird, daß die Umgebungstemperatur ein Mittelwert aus Bodentemperatur und Lufttemperatur ist.

Bei den virtuellen Methoden, bei denen Wechselwirkungen zwischen Reifentyp und Fahrzeug ermittelt werden, können Verfahren zur Mehrkörpersimulation, CAE/FEM-Verfahren in Verbindung mit statistischen Methoden, wie DoE (Design of Experiments), Regressionsanalyse usw. eingesetzt werden.

Insgesamt ist mit der Erfindung ein flexibel nutzbares Diagnosesystem geschaffen, das sowohl im Fahrzeug über die dort befindlichen Sensoren und die Auswerteeinheit eine Warnung vor gefährlichen Zuständen und eine Abfrage von vorhergesagten Restlaufzeiten oder fehlerhafter Einstellungen ermöglicht, als auch in einer Werkstatt ausgelesen werden kann, um einen Wartungsbedarf des Fahrzeugs zu ermitteln. Die in dem Diagnosemodell eingesetzten Kennfelder, Algorithmen und Abhängigkeiten können experimentell ermittelt und/oder durch Simulation, CAD/FEM-Berechnung usw. gewonnen werden. Als Sensoren kommen unterschiedlichste Sensoren zum Einsatz, wie Temperatur- und Druckaufnehmer, Drehzahl-, Geschwindigkeits-, Laufleistungs-, Gierratensensoren usw. Zur Energie- und Signalübertragung zwischen Rad und Fahrzeug werden berührungslos arbeitende Verfahren eingesetzt, beispielsweise auf der Basis induktiver Energieübertragung und HF-Technik.

Eines der Kernstücke des erfindungs gemäßen Diagnosesystems ist in einer entsprechenden Ausbaustufe eine im Reifen applizierte Sensor-Transpondereinheit, mit der Betriebsparameter des Reifens, wie Innenluftdruck, Temperaturen an verschiedenen Stellen, Dehnungen, Kräfte, Beschleunigung usw. aufgenommen und vorteilhafterweise berührungslos an die Auswerteeinheit im Fahrzeug übertragen werden können.

Fig. 7 zeigt eine der Fig. 1 ähnliche Ansicht eines Reifens, bei dem zwischen dem Gürtel 10 und der Karkasse 4 ein Sensornetz 124 angeordnet, beispielsweise einlaminiert oder einvulkanisiert ist, das in Fig. 7 nicht dargestellte Sensoreinheiten enthält. Die Sensoreinheiten können im dargestellten Beispiel mittels einer fahrzeugfesten Antenne 126 ausgelesen werden, die über eine Datenleitung 32 an ein Steuergerät 28 bzw. eine Auswerteeinheit 28 (Fig. 4) angeschlossen ist, das weitere, mit Fahrzeugsensoren oder anderen Steuergeräten verbundene Eingänge und Ausgänge aufweisen kann und an das Fahrzeugbussystem 30 (Fig. 4) angeschlossen ist.

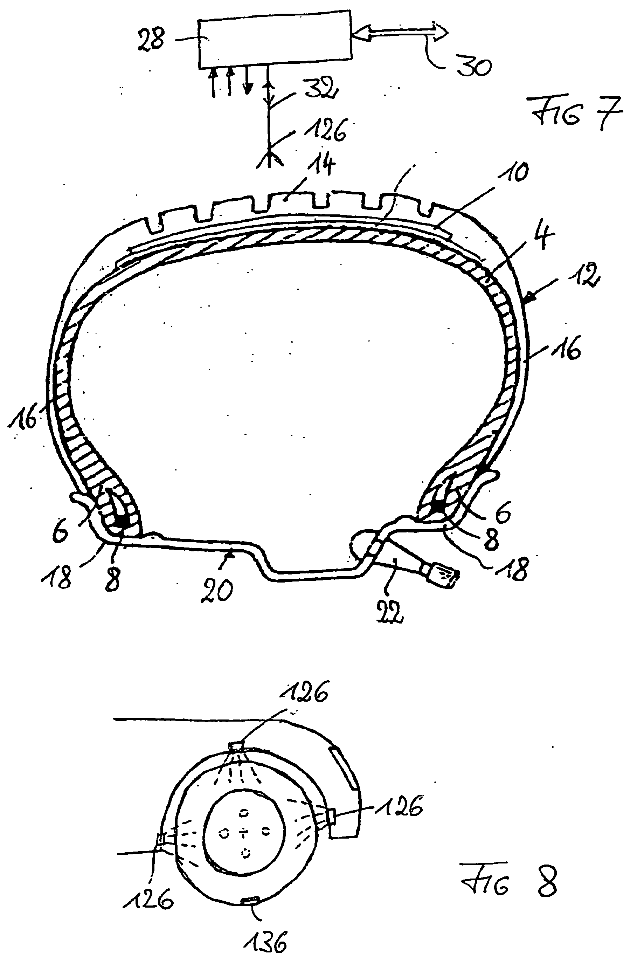

Fig. 8 zeigt schematisch drei in einem Kotflügel eines Fahrzeugs in Umfangsrichtung beabstandet angeordnete und erforderlichenfalls auch in Querrichtung des Fahrzeugs zueinander versetzte Antennen 126, die mit wenigstens einem im Sensornetz 124 enthaltenen oder mit einem an einen Knoten des Sensornetzes angeschlossenen Transponder 136 kommunizieren. Je nach Anordnung des oder der Transponder können mehr oder weniger fahrzeugfeste Antennen vorgesehen sein.

Die Figuren 9 bis 11 zeigen von der Reifeninnenseite her Aufsichten auf das Sensornetz 124 mit dem darunter befindlichen Gürtel 10.

Bei der Ausführungsform gemäß Fig. 9 sind in dem Sensornetz 124 enthaltene Sensoreinheiten 138 über je eine Leitung 140 mit einem Knoten 142 verbunden, der den Transponder 136 enthält.

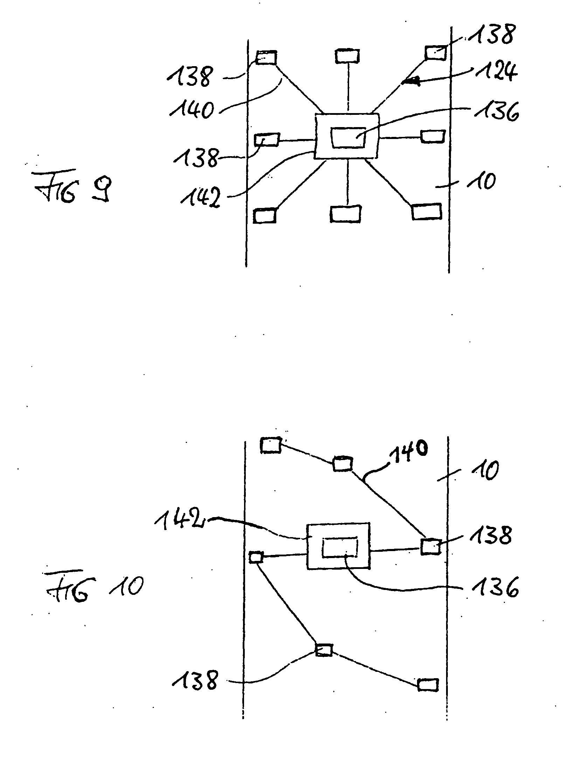

Bei der Ausführungsform gemäß Fig. 10 sind jeweils mehrere, in Reihe hintereinander angeordnete Sensoren 138 über je eine gemeinsame Leitung 140 mit dem Transponder 136 verbunden.

Fig. 11 zeigt eine Ausführungsform, bei der die Leitungen 140 ein rautenförmiges Netz 141 bilden, das an den Knoten 142 mit dem Transponder 136 angeschlossen ist.

Die fadenartigen Leitungen 140 bestehen vorteilhafterweise aus Stahlseil, Carbon, Leitplastik und anderen, beispielsweise aus der Raumfahrt bekannten elektrischen Leitern, die zur notwendigen Isolierung und Zugentlastung mit weiteren Materialien oder Fasern kombiniert sind, beispielsweise Carbon, Aramid, Stahlseil-Kunststoff, Leitplastik-Keramikfaser usw., wobei die Verbundwerkstofffäden bzw. Leitungen chemikalien- und hitzebeständig sein müssen, um beim Vulkanisieren des Reifens nicht beschädigt zu werden, und mechanische Eigenschaften aufweisen müssen, die den Beanspruchungen im Betrieb des Reifens standhalten.

Je nach Datenverarbeitungstechnik ist jede Sensoreinheit 138 über eine oder mehrere elektrisch voneinander isolierte Leitungen mit dem zentralen Knoten 142 verbunden oder werden von den einzelnen Sensoreinheiten Leitungen gemeinsam benutzt, wenn die Sensoreinheiten beispielsweise über eigene Prozessoren verfügen und in Multiplex- bzw. Bustechnik einzeln vom Transponder 136 abgefragt werden können. Innerhalb des Leiter- bzw. Fadennetzes 141 können somit beispielsweise die Schaltungsanordnungen der Fig. 8 oder 9 realisiert werden.

Je nach gewünschter Anzahl der Sensoren bzw. Bestückung des Reifens mit Sensoreinheiten wird aus den notwendigen Leitern 140 ein Leiter- bzw. Fadennetz 141 hergestellt, das mit den Sensoreinheiten 138 bestückt das Sensornetz 124 bildet, das zwischen dem Gürtel 10 und der Karkasse 4 angeordnet und bei der Herstellung des Reifens einvulkanisiert wird. Die Breite des Sensornetzes 124, die in Figur 1 etwas größer als die des Gürtels 10 ist, kann je nach erwünschten Sensoreinheiten bis in die Seitenwände 16 hineinreichen oder den Gürtel 10 nicht vollständig überdecken. Ebenso muss sich das Sensornetz 124 nicht zwingend um den gesamten Umfang des Reifens (in dessen Laufrichtung gesehen) erstrekken. Die einzelnen Fäden des Netzes können mehradrig ausgeführt sein. Eine Masse für alle Sensoreinheiten 138 und den Transponder 136 kann durch die Stahllage des Gürtels 10 gebildet sein, mit der jede Sensoreinheit und dem Transponder 136 leitend verbunden werden. In der dargestellten Ausführungsform bildet der Knoten 142 beispielsweise ein Grundsubstrat mit Leiterbahnen zum Anschluss der Leiter 140 und der auf das Grundsubstrat aufgebrachten Elemente des Transponders, wie Prozessor, Speicher, Antenne und ggfs. Energieversorgung. Je nach Konstruktion können mechanisch stabile Fäden sich durch das ganze Substrat hindurcherstrecken oder mit Dehnelementen zur Kraftmessung verbunden sein, die in das Substrat integriert sind.

Die Sensoreinheiten 138 können je nach zu ermittelnden physikalischen Größen bzw. Betriebsparametern des Reifens unterschiedlichster Art sein. Die Sensoreinheiten 138 können mehrere Sensorelemente enthalten, beispielsweise eines zur Messung der Temperatur, eines zur Messung des Reifenluftdrucks, eines zur Messung des vom Gürtel her wirkenden Drukkes sowie Dehnungsmesszellen zur Messung der von den Fäden her wirkenden Kräfte oder Dehnungen (Fig. 11), die ein Maß für die jeweils lokale Dehnung der Reifenstruktur sind.

Durch eine ausreichend feine Verteilung der Sensoreinheiten über die Reifenaufstandsfläche (Latschfläche) liegen die Informationen in einer Form vor, die eine Darstellung der jeweiligen gemessenen Größe über die jeweilige Fläche zulässt. Diese Darstellungen können, wie nachfolgend erläutert werden wird, in vielfältiger Weise genutzt werden.

Druckmessungen können beispielsweise mittels druckempfindlicher Folien oder Mikromesszellen mit Piezoelementen oder Kondensatoren erfolgen. Dehnungen der Reifenstruktur lassen sich mit dehnungsempfindlichen Folien oder Mikromesszellen (piezoelektrisch oder nach dem Kondensatorprinzip) messen. Die Temperaturverteilung kann in ähnlicher Weise piezoelektrisch, mittels Widerstandsmesselementen usw. erfolgen. Die Messprinzipien sind an sich bekannt und werden daher nicht erläutert.

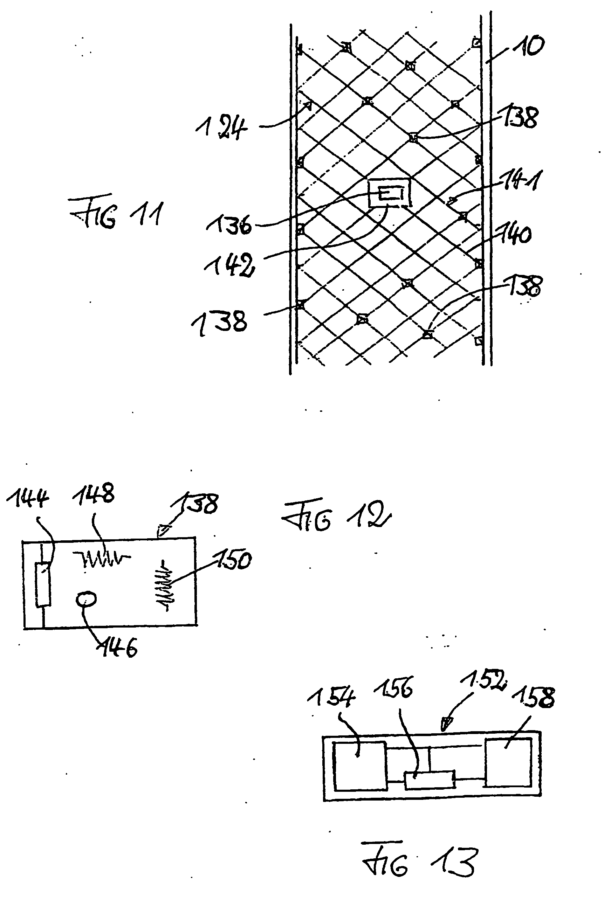

Fig. 12 zeigt schematisch eine Sensoreinheit 138 mit einem Temperaturenesselement 144, einem Druckmesselement 146 und zwei senkrecht zueinander angeordneten Dehnmesselementen 148 und 150.

Für die Übertragung der von den Sensoreinheiten 138 erfassten Daten gibt es unterschiedlichste Möglichkeiten. Eine vorteilhafte Möglichkeit besteht darin, die Daten über den Transponder 136 zu übertragen, der dem Knoten 142 zugeordnet ist, mit dem die Sensoreinheiten 138 verbunden sind. Der Transponder 136 wird jeweils, wenn er sich an einer der Antennen 126 vorbeibewegt, induktiv mit Strom versorgt. Es versteht sich, dass der Transponder 136 dazu vorteilhafterweise nicht unmittelbar unter dem Gürtel 10, sondern seitlich neben dem Gürtel angeordnet ist, so dass er gegenüber der oder den Antennen 126 nicht abgeschirmt ist. Die Datenübertragung vom Transponder 136 über die Antenne bzw. Antennen 126 zum Steuergerät 128 kann online erfolgen, indem jeweils eine der Sensoreinheiten ausgelesen wird; in einem anderen Verfahren werden in einem vom Prozessor des Transponders gesteuerten Speicher die Daten der einzelnen Sensoreinheiten zyklisch eingelesen, zwischengespeichert und dann ausgelesen, beispielsweise nach einem Sample-Hold-Verfahren. Das Auslesen der Sensoreinheiten kann zeit- oder drehzahlgesteuert erfolgen. Transponder und die damit zusammenhängenden Übertragungstechniken sind an sich bekannt, so dass diese nicht im einzelnen erläutert werden.

Beispielsweise kann bei jeder Radumdrehung ein Temperaturwert, Druckwert, eine Dehnung usw. eines Sensors ausgelesen werden, so dass sich nach einer entsprechenden Anzahl von Umdrehungen ein vollständiges Bild des Reifens ergibt. Je nach verfügbarer Datenverarbeitungskapazität können mehrere, den einzelnen in ihrer Lage bekannten Sensoreinheiten zugeordnete Messwerte gleichzeitig ausgelesen werden, so daß sich ein vollständiges Bild (Footprint) des Reifens rasch ergibt. Dabei können wenig dynamische Größen, wie Temperaturen mit geringerer Folgefrequenz ausgelesen werden als sich rasch verändernde Größen, wie beispielsweise Druck- und Dehnungsverteilung. Es versteht sich, dass Temperatursensorelemete vor allem in dem Randbereich des Gürtels 10 in der Reifenschulter angeordnet sind, da dies diejenige Stelle des Reifens ist, an der bei geringem Luftdruck oder zu hohen Belastungen die höchsten Temperaturen auftreten, die den Reifen möglicherweise schädigen.

Das Auslesen der Daten über einen Transponder, der durch entsprechende elektronische Ausrüstung (Speicher, Prozessor) über Datenverarbeitungskapazität verfügt, ist nicht zwingend. Die einzelnen Sensorelemente können beispielsweise Schwingkreise mit sensorspezifischen Resonanzfrequenzen aufweisen, so daß die Sensoren frequenzspezifisch unmittelbar ausgelesen werden können. Das Messsignal kann durch die Verstimmung der Resonanzfrequenz gegeben sein oder durch eine Modulation der Resonanzfrequenz. Bei dieser Art von Datenübertragung sind der zentrale Knoten 142 mit dem ihm zugeordneten zentralen Transponder 136 nicht erforderlich.

Das Faden- bzw. Leitungsnetz 141 ist nicht zwingend. Bei der zunehmenden Miniaturisierung von Transpondern, in die Sensorelemente integriert sind und die insgesamt biegbar bzw. flexibel sind, und den niedrigen Kosten ist es möglich, eine Vielzahl einzelner Sensoreinheiten mit integrierten Transpondern sowie ggfs. zusätzlicher eigener Energieversorgung im Reifen an zweckentsprechenden Stellen anzuordnen und berührungsfrei auszulesen. Solche biegsamen Kunststoff-Chips mit ausreichender Temperaturfestigkeit sind beispielsweise in dem Artikel von F. Miller "Polytronic: Chips von der Rolle", Fraunhofer Magazin 4, 2001, S. 8 - 12, beschrieben. Solche Chips können einzeln in den Reifen eingebracht werden, oder als vorgefertigte Baugruppe an einem Fadennetz angeordnet.

Die in der geschilderten Messtechnik gewonnenen Daten des infolge der in ihm verteilten Sensoreinheiten "intelligenten" Reifen lassen sich in vielfältiger Weise auswerten. Das Steuergerät weist dazu einen Mikroprozessor und Seichereinheiten auf, so daß der Betrieb einer in ihm enthaltenen Ausleseeinheit und Auswerteinheit gesteuert wird und Ergebnisse an einer Anzeigeneinheit angezeigt werden. Der Temperaturverlauf des Reifens kann gespeichert werden, wobei für die Lebensdauer bzw. Schädigung des Reifens entscheidend ist, wie lange an einer Stelle der Reifenschulter eine über einem Schwellwert liegende Temperatur vorhanden ist. Aus unzulässig hoher Temperatur kann auf unzureichenden Luftdruck im Reifen geschlossen werden. In Kombination mit der mechanischen Beanspruchung des Reifens, beispielsweise der Dehnung bzw. Verformung in der Ebene der Lauffläche kann auf falsche Sturz- und Spurwerte des Fahrzeugs geschlossen werden, so daß vom Steuergerät eine entsprechende Fehleranzeige erfolgt. Auch aus Unsymmetrie der Temperaturverteilung können Rückschlüsse auf fehlerhafte Fahrzeugzustände geschlossen werden, beispielsweise lokale heiße Anströmung durch eine defekte Abgasanlage, falsche Achseinstellungen usw.. Der Footprint der Dehn- und/oder Druckverteilung innerhalb der Reifenaufstandsfläche, (aus Reifenlatsch) erlaubt Aussagen über die übertragbaren Reibungskräfte (längs und quer), die Achseinstellungen, das Verschleiß-, Rollwiderstands-, Aquaplaningverhalten usw.. Neben der Diagnosemöglichkeit (z.B. Achseinstellungen, Lagerdefekte usw.) können ausgewertete Druckschwankungen auch eine Aussage über mechanische Reifendefekte ermöglichen. Zusätzlich lassen sich die ermittelten Werte, ggf. unter Berücksichtigung der Fahrzeuggeschwindigkeit und der augenblicklichen Motorleistung Fahrzeugregel- und Warnsystemen zuführen, beispielsweise einem Fahrstabilitätssystem oder einem Komfortsystem, das adaptive Hydrolager entsprechend dem Strassen- und Fahrzeugzustand einstellt.

Insgesamt eröffnet die Erfindung nicht nur die Möglichkeit, die statischen und dynamischen Beanspruchungen des Reifens zu erfassen, seine Verlustleistung zu ermitteln; die Funktionstüchtigkeit des Reifens zu überwachen und seine Lebensdauer zu prognostizieren, sondern auch die Möglichkeit, aus der Auswertung der erfassbaren detaillierten Reifendaten auf Fehler am Fahrzeug zu schließen und deren Zustand zu überwachen..

Fig. 13 stellt eine autarke Umdrehungsmesseinheit 152 dar, die in das Sensornetz 124 integriert werden kann oder eigenständig in den Reifen einvulkanisiert wird. Die Umdrehungsmesseinheit 152 enthält ein Sensorelement 154, das bei jeder Reifenumdrehung ein Signal abgibt Das Sensorelement 154 kann beispielsweise ein Piezoelement enthalten, gegen das bei sich drehendem Reifen eine träge Masse mit schwankender Kraft drückt, so daß ein am Sensorelement 154 abgreifendes Spannungssignal schwankt. Das Ausgangssignal des Sensorelements 154 lässt sich zur Energieversorgung auswerten, welche Energie in einer Energieversorgungseinheit 156 entsprechend aufbereitet wird, und läßt sich weiter zur Erzeugung eines in die Umdrehungen des Reifens integrierenden Signals nutzen, indem jede durch eine Umdrehung bedingte Schwankung des Ausgangssignals des Sensorelements 154 einen Zählstand einer Speichereinheit 158 um Eins erhöht.

Mit der in dem Reifen integrierten autarken Umdrehungsmesseinheit 152 wird erreicht, daß der Reifen selbst ein Signal enthält, das unabhängig davon, an welchen Fahrzeugen der Reifen genutzt wurde, die Anzahl der Umdrehungen angibt, die der Reifen zurückgelegt hat. Der Zählstand der Speichereinheit 158 kann dazu in Werkstätten ausgelesen werden. Für Manipulationssicherheit ist ein Rücksetzen der Speichereinheit 158 nicht oder nur besonders autorisierten Stellen möglich.

Alternativ kann die Umdrehungsmesseinheit in ein felgenfestes Ventil (z.B. Ventil 22 in Fig. 1) integriert werden.

Ähnlich wie die Umdrehungsmesseinheit 152 können auch die Sensoren 138 und/oder der Transponder 136 mit aus der Umdrehung des Reifens erzeugter Energie versorgt werden. Weiter können Speicherelemente vorgesehen sein, in denen bestimmte, für den Zustand des Reifens kritische Größen im Reifen selbst gespeichert sind, so dass eine Qualitätsüberwachung des Reifens, beispielsweise Flankenschädigung oder mechanische Überbeanspruchung am Reifen selbst durch Auslesen der entsprechenden Datenspeicher erkannt werden kann.

Die Warnmeldungen (52 in Fig. 5) können in zwei Levels aufgeteilt werden, nämlich Warnung vor singulären Störungen, wie beispielsweise falschem Reifenfülldruck, falsche Achseinstellungen, zu hohe Radlast usw. , oder Warnung vor kombinierten Störungen, bei denen mehrere Störungen überlagert sind und deren gegenseitige Wechselwirkungen zusätzlich gefährlich Betriebszustände erzeugen können, beispielsweise können sich bei fehlerhaften Fahrwerkeinstellungen (Sturz, Spur) hohe Radlasten verstärkt auf die Reifentemperatur auswirken.

Durch zusätzlich Einrichtungen, wie z.B. Sensoren und ein Auswertesystem zur Ermittlung von Schwingungen des Reifens im Fahrbetrieb kann das beschriebene Diagnosesystem um eine Warnmöglichkeit erweitert werden, die einen entstehenden oder bereits eingetretenen Schaden des Reifens anhand des Schwingungsverlaufes erkennt.

Die in dem Diagnosesystem abgelegten Kennfelder sind bevorzugt multidimensional, beispielsweise können für die Reifentemperatur Kennfelder abgelegt sein, die die Temperatur abhängig von Sturz, Spur, Gewichten, Lastverteilungen und Umgebungsbedingungen so wie den aktuellen fahrdynamischen Parametern, wie Geschwindigkeit, Gierrate, angeben.

Abhängig von der Anzahl zu ermittelnder Parameter sind unterschiedliche Ausbaustufen realisierbar. Die Minimallösung eignet sich zur Bestimmung der Restschädigung auf Basis der Gürtelrandtemperatur und deren Zeitanteilen. Die Hardware-Ausstattung umfasst Sensoren für die Reifen-Gürtelrandtemperatur, die Zeit sowie vorteilhafterweise die Laufstrecke, eine Übertragungseinheit, eine Auswerteeinheit mit Speicherfunktion und eine Warnvorrichtung. Die Auswerteeinheit enthält das charakteristische Kennfeld des jeweiligen Reifens bezüglich der Gürtelkantentemperatur und deren Zeitanteilen sowie die maximal mögliche Schädigung bzw. Laufstrecke. Bei einer noch einfacheren Minimallösung entfallen die Sensoren für die Gürtelrandtemperatur und diese Größe wird rechnerisch auf Basis der Werte der relevanten Parameter durchgeführt.

Im Folgenden werden Beispiele für die Berechnung für die Wärme-Verlustleistung im Reifen sowie die Berechnung der Reifentemperatur angegeben:

A. Näherungsweise Berechnung der Wärme-Verlustleistung $P_{loss}$ im Reifen eines Rades
Die Verlustleistung ist die Differenz zwischen Eingangs- und Ausgangsleistung

$$P_{loss} = P_{in} - P_{out}$$

wobei die Eingangsleistung das Produkt des Radmomentes mit der Raddrehzahl ist.

$$P_{in} = M_y * \omega_y$$

Die Ausgangsleistung beschreibt die Leistung, die über das Rad abgegeben wird:

$$P_{out} = F_x * v_x + F_y * v_y + F_z * v_z,$$

wobei F die jeweilige Kraft und v die jeweilige Geschwindigkeit in einer der Koordinatenrichtungen x, y und z ist. Die Verlustleistung $P_{loss}$ kann in 6 Hauptbestandteile zerlegt werden:

1. $P_{loss,\ vs} = F_x * v_{x,rel} = F_x * v_x * S_x$ Umgesetzte Leistung über Längsschlupf $S_x$

2. $P_{loss,vy} = F_y * v_{y,rel} = F_y * v_x * \tan(\alpha)$ Umgesetzte Leistung über Schräglauf$^\alpha$

3. $P_{loss,v_z} = F_z * v_{z,rel} = F_z * \dfrac{d\Delta z_{wheel}}{dt}$ Umgesetzte Leistung über die vertikale Reifenverformung ("Reifendämpfung")

4. $P_{loss,\omega z} \cong 0$... nicht direkt messbar, umgesetzte Leistung über dynamische Sturzänderung (vernachlässigbar)

5. $P_{loss,Roll} = F_{x,Roll} * v_x = F_x + \dfrac{M_y}{r_{stat}}$ Umgesetzte Leistung über den Rollwiderstand

6. $P_{loss,\omega z} = M_z * \omega_z$ Umgesetzte Leistung über dynamische Spuränderung.

Zusammengefasst:

$$P_{loss} = -M_y * \omega_y - F_x * v_x + \underbrace{P_{loss,v_y} + P_{loss,v_z} + P_{loss,\omega_z} + P_{loss,\omega_t}}_{P_{loss,roll}},$$

wobei

x: Koordinate in Richtung der Fahrzeugfront (Längs),
y: Koordinate in Richtung der Fahrzeugseite (Lateral),
z: Koordinate in Richtung senkrecht nach oben vom Fahrzeug (Vertikal),
$\omega_x$: Wank- /Rollgeschwindigkeit,
$\omega_y$: Drehgeschwindigkeit (-Frequenz),
$\omega_z$: Giergeschwindigkeit,
$F_x$: Längskraft,
$F_y$: Lateral-/ Seitenkraft,
$F_z$: Vertikalkraft (Aufstandskraft / Ladung),
$M_x$: Roll-Drehmoment (Kippmoment),
$M_y$: Antriebs- / Bremsdrehmoment,
$M_z$: Gier- Moment und
$v_{x,y,z}$: Lokale Radgeschwindigkeiten in jew. Koordinaten-Richtung

sind.
Somit kann die Verlustleistung aus rein mechanischen Parametern berechnet werden.
B. Näherungsweise Berechnung der Reifentemperatur unter Berücksichtigung der Wärmebilanz, einschließlich Wärme-Verlustleistung durch mechanische Arbeit und der Umgebungsbedingungen:

Wärmebilanzgleichung für den Reifen im Betrieb:

$$\dot{Q} = \dot{Q}_{kon} + \dot{Q}_{diff} + \dot{Q}_{dir} + \dot{Q}_W \;\Rightarrow$$

$$c \cdot m \cdot \dot{T}_R(t) = \alpha \cdot A_1 \cdot T_a - \alpha \cdot A_1 \cdot T_R(t) -$$

$$- \alpha \cdot A_1 \cdot t \cdot \dot{T}_R(t) + \sigma \cdot \varepsilon \cdot A_2 \cdot \left(T_B^4 - T(t)_R^4\right) + \dot{Q}_0 + \dot{Q}_W$$

Folgende Einflussparameter werden in der Wärmebilanz des physikalischen Modells berücksichtigt:

- die Konvektion $\dot{Q}_{kon}$ (Energieaustausch mit der Luft der Umgebung)
- die diffuse Wärmestrahlung $\dot{Q}_{diff}$ aus der Umgebung (Wärmeübertragung durch Boden, Straße)
- die direkte Sonneneinstrahlung $Q_{dir}$
- der Anteil der mechanischen Arbeit $\dot{Q}_W$, der im Reifen in Wärme umgesetzt wird.

Im Einzelnen sind dies:
Wärmemenge im Reifen:

$$Q = c \cdot m \cdot \left(T_R - T_0\right) \text{ bzw. } \dot{Q} = c \cdot m \cdot \dot{T}_R(t)$$

Dabei ist

m    die Masse des Reifens und
c     ist die Wärmekapazität des Reifens.

Konvektion:

$$Q_{kon} = \alpha \cdot A_1 \cdot t \cdot \Delta T$$

Dabei ist:

$A_1$    die Berührungsfläche von einem Medium zu einem anderen,
t     die Dauer des Wärmeübergangs,
$\rho T=$   $T_a$-$T_R$ die Temperaturdifferenz des Wärmeübergangs bei t = 0 mit der Außentemperatur $T_a$ und der Reifentemperatur $T_R$,
$\alpha$    der Wärmeübergangskoeffizient (abhängig von der Geschwindigkeit)

mit:

$$\alpha = 6{,}20 + 4{,}2 \cdot v \qquad\qquad v \leq 5m/s$$

$$\alpha = 7{,}520 \cdot v^{0{,}78} \qquad\qquad v > 5m/s$$

$$\alpha \ in \ \frac{W}{m^2 \cdot K}; \quad v \ in \ \frac{m}{s}$$

Diffuse Wärmestrahlung:

$$P_{diff} = \dot{Q}_{diff} = \sigma \cdot \varepsilon \cdot A_2 \cdot \left(T_B^4 - T_R^4\right)$$

Dabei ist:

$\sigma$ = 5,671E-08 W/(m$^2$K$^4$) die Strahlungskonstante,
$\varepsilon$ = 0,95 der Wärmeübergangskoeffizient von Gummi,
$T_B$ die Temperatur des Bodens,
$A_2$ die Oberfläche des Reifens.

Direkte Strahlung (Sonneneinstrahlung):

$$\dot{Q}_0 = P_0 \cdot A_2$$

Dabei ist:

$Q_0$ die durch Sonneneinstrahlung aufgenommene Wärme
$P_0$ = ca. 666 W/m$^2$ (Klima- und wetterabhängig).

Mechanische Leistung:

$$\dot{Q}_v \ (\text{entspricht Verlustleistung } P_{loss})$$

Die pro Zeiteinheit im Reifen in Wärme umgesetzte mechanische Arbeit ergibt sich aus der unter A aufgeführten Rechnung Verlustleistung $P_{loss}$ im Reifen.
Rechenoperation zur Bestimmung der Reifentemperatur:
Der quasi-stationäre Endwert der Reifentemperatur $T_R$ ergibt sich dann aus einem iterativen Berechnungsalgorithmus zur Lösung der Wärmebilanzgleichung für eine bezüglich Einschwingvorgang des Gesamtsystems ausreichend lange Zeit t.
C. Empirischer Ansatz zur näherungsweisen Ermittlung der Reifentemperatur $T_R$

$$T_R = \frac{a * P_{loss} + b * T_{Boden} + c * T_{Anströmung} + d * P_{Strahlung}}{N} + K \qquad \text{(Formel T)}$$

a, b, c, d, K und N sind die typspezifischen Parameter aus Kennfeld-Matrizen, die durch Versuch oder Simulation gewonnen werden. K kann dabei sowohl die Form eines konstanten Korrekturterms, als auch einer Variablen mit Kombinationen aus mehreren der anderen Parameter - auch höherer Ordnung - annehmen.
Die Verlustleistung $P_{loss}$ ergibt sich z.B. aus dem unter A erläuterten Modell, die
Umgebungsparameter Straßen- bzw. Bodentemperatur $T_{Boden}$, Luft-Anströmtemperatur $T_{Anströmung}$ und Sonneneinstrahlungsleistung $P_{Strahhung}$ (in der Wärmebilanzgleichung: $P_0$) ergeben sich aus Messungen oder aus Parameterschätzungen über Datenbanken bzw. Korrelationsmodelle.

Die Verlustleistung $P_{loss}$ kann alternativ auch über einen weiteren empirischen Ansatz, z.B. der Form

$$P_{loss} = \frac{s * Camber + t * Toe + p * Pressure + l * Load + v * Speed}{N} + K \qquad \text{(Formel P)}$$

angenähert werden.

Die Parameter Camber (Sturzeinstellung), Toe (Vorspureinstellung), Pressure (Reifenluftdruck) sind dabei Platzhalter für Kennwerte der Fahrzeug- bzw. Reifeneinstellparameter. Die Parameter Load (Ladung / Reifenvertikalkraft) und Speed (Fahrgeschwindigkeit) sind Platzhalter für Kennwerte der Fahrzeugbetriebsparameter.

Die Kennwerte können entweder gemessene Daten aus Versuchsreihen oder Parameterschätzungen, z.B. aus Fahrdynamikregelungen sein.

s, t, p, l, v, K und N sind die Parameter aus typspezifischen Kennfeld-Matrizen, die durch Versuch oder Simulation gewonnen werden. K kann dabei sowohl die Form eines konstanten Korrekturterms, als auch einer Variablen mit Kombinationen aus mehreren der anderen Parameter- auch höherer Ordnung - annehmen.

Das empirische / statistische Temperaturmodell kann unabhängig von der Verlustleistung $P_{loss}$ auch als Normierungsmodell bzw. Korrekturmodell zur Berücksichtigung der Umgebungsbedingungen eingesetzt werden.

Im einfachsten Fall kommt dazu die stark vereinfachte Näherung T Umgebung = ½ ($T_{Boden}$ + $T_{Luft}$) zum Einsatz.

Im Folgenden wird ein Beispiel für die Berechnung der Reifentemperatur über die Verlustleistung angegeben:

Eine einfache Möglichkeit zur Verlustleistungsabrechnung gibt die vorstehende Formel P an. Mit Hilfe des Reifen-Typspezifischen Fahrzeug-Reifen-Interaktionsmodells 88 (Fig. 6) als Ergebnis der virtuellen Kennfeldermittlung 74 oder realen Kennfeldermittlung 86, jeweils für die Kenngröße "Verlustleistung" stehen die Parameter s, t, p, l, v, K und N zur Verfügung. Die Fahrzeugparameter FE, FP (Sturz, Spur, Radlast) und die Fahrzeugbetriebsparameter FP (z.B. Geschwindigkeit) sowie die Reifenparameter RP (z.B. Typ) und Reifeneinstellparameter (z.B. Luftdruck) sind bekannt beziehungsweise sind aus Messdaten am Fahrzeug, wie beispielsweise aus der Fahrzeugsensorik 44 gewonnene Werte. Die Verlustleistung $P_{loss}$ errechnet sich aus der vorgenannten Formel.

Zur Berechnung der Reifentemperatur $T_R$, beispielsweise der Temperatur in der Gürtelkante, wird die so errechnete Verlustleistung $P_{loss}$ in die weiter oben angegebene Formel T für die Reifentemperatur $T_R$ eingesetzt. Die Parameter a, b, c, d, K und N sind dazu aus dem Reifen-Typspezifischen Fahrzeug-Interaktionsmodel 88 als Ergebnis der virtuellen Kennfeldermittlung 74 oder realen Kennfeldermittlung 86, jeweils für die Kenngröße "Temperatur" bekannt.

Die Umgebungsparameter UP, wie $T_{Boden}$, $T_{Anströnung}$, $P_{Strahung}$ sind beispielsweise aus den Daten der Fahrzeugsensorik 44/42 (Fig. 5) verfügbar.

Nachfolgend wird ein Beispiel für die Anwendung des Diagnosemodells aus Fig. 3 von "rechts" nach "links" angegeben:

Mit Messung der Reifenbetriebstemperatur RB, beispielsweise der Temperatur in der Gürtelkante, kann mit Hilfe des Diagnosemodells ein Fahrzeugeinstellparameter FE, z.B. der Sturz über Berechnung geschätzt werden, indem in das Reifen-Typspezifische Fahrzeug-Reifeninteraktionsmodell 88 (Fig. 6) hinterlegte Temperatur-Kennfeld die bekannte Temperatur in der Gürtelkante und zusätzlich die notwendigerweise bekannten Reifenparameter RP und mindestens ein weiterer Fahrzeugparameter FE, FP und Fahrzeugbetriebsparameter FB eingesetzt werden.

Das beschriebene Diagnosesystem öffnet weiter die Möglichkeit, nach Erkennung der Überschreitung zulässiger Werte beispielsweise bei den Reifen-Betriebsparametern geeignete Gegenmaßnahmen mit Hilfe einer aktiven oder passiven technischen Einrichtung einzuleiten. Beispielsweise kann die Reifentemperatur durch Änderung der Luftströmung (Erhöhung der Luftgeschwindigkeit und/oder Leiten des Luftstromes) in der Umgebung des Reifens mittels ausfahrbarer aerodynamischer Leiteinrichtungen (Flügel / Schlitze) oder durch gezielte Kühlung mit einem ausströmenden Gas niedriger Temperatur begrenzt werden. Ein Gas niedriger Temperatur kann an Bord erzeugt werden, indem der Reifen mit einem expandierenden, vorher verflüssigten Druckgas angeströmt wird oder von einem über einen Wärmetauscher gekühlten Luftstrom, wie er ähnlich zur Fahrzeugklimatisierung verwendet wird. Eine andere Möglichkeit, einer unzulässig hohen Reifentemperatur entgegenzuwirken liegt in der Erhöhung des Reifenluftdrucks während der Fahrt, um die in Wärme umgesetzte mechanische Verlustleistung zu vermindern.

In Kombination mit entsprechenden Steuer- und Regeleinrichtungen ist auf diese Weise auch ein Verfahren zur thermischen Konditionierung der Betriebsumgebung in der Nähe des Reifens möglich, den Reifen in einem thermisch optimalen Arbeitsbereich zu betreiben.

Die vorbeschriebenen Merkmale können ebenso wie Merkmale der nachfolgenden Ansprüche einzeln und in unterschiedlichsten Kombinationen verwendet werden.

**BEZUGSZEICHENLISTE**

| 4 | Karkasse |
|---|---|
| 8 | Kern |
| 12 | Gummischicht |
| 16 | Seitenwand |
| 20 | Felge |
| 24 | Temperatursensor |
| 28 | Auswerteeinheit |
| 32 | Datentransferstrecke |
| 36 | Reifensensorik |
| 40 | Betriebsdateneinheit |
| 44 | Fahrzeugsensorik |
| 50 | Diagnosesystem |
| 58 | Fahrzeugbetriebsparmetereinheit |
| 60' | Festfahrzeug |
| 62 | Reifenparametereinheit |
| 66 | Reifenkräfte, -momente |
| 70 | Reifenverlustleistung, -temperaturen |
| 74 | virtuelle Kennfeldeinheit |
| 78 | Temperaturverteilung, Verlustleistung |
| 80 | Simulationsrechnung |
| 84 | Umgebungsbedingungen |
| 88 | Interaktionsmodell |
| 92 | Prüfstandsmessungen |
| 124 | Sensornetz |
| 128 | Steuergerät |
| 138 | Sensoreinheit |
| 141 | Fadennetz |
| 144 | Temperaturmesselement |
| 148 | Dehnmesselement |
| 152 | Umdrehungsmesseinheit |
| 156 | Energieversorgungseinheit |
| 6 | Wulst |
| 10 | Gürtel |
| 14 | Laufstreifen |
| 18 | Schulter |
| 22 | Ventil |
| 26 | Bereich |
| 30 | Datenbus |
| 34 | Reifensensoren |
| 38 | Reifendateneinheit |
| 42 | Sensoren |
| 46 | Fahrzeugbetriebsparametereinheit |
| 52 | Warn- und Meldeeinrichtungen |
| 60 | Fahrzeugparametereinheit |
| 62' | Reifen |
| 64 | Berechnungseinheit |
| 68 | Reifenverlustleistungsmodell |
| 72 | Umgebungstemperaturmodell |
| 76 | Prüfstand |
| 82 | Temperatur-Verlustleistungskennfeld |
| 86 | reale Kennfeldeinheit |
| 90 | Vergleichseinheit |

94    Lebensdauermodell
126   Antenne
136   Transponder
140   Leitung
142   Knoten
146   Druckmesselement
150   Dehnmesselement
154   Sensorelement
158   Speichereinheit

**Patentansprüche**

1.  Verfahren zur Überwachung eines Fahrzeugreifens, enthaltend folgende Schritte:

    - Bereitstellen eines fahrzeug- und/oder reifenspezifischen Diagnosemodells (88), mit Hilfe dessen aus den Werten von für die Beanspruchung eines Fahrzeugreifens relevanten Betriebsparametern wenigstens ein für eine Schädigung des Reifens relevanter Reifenschädigungsparameter berechenbar ist,
    - Bereitstellen eines Reifenschädigungsmodells (94), mit Hilfe dessen aus dem zeitlichen Verlauf des Wertes des wenigstens einen Reifenschädigungsparameters eine Reifenschädigungskenngröße bestimmbar ist,
    - Erfassen der Werte der Betriebsparameter,
    - Bestimmen des Wertes des wenigstens einen Reifenschädigungsparameters,
    - Erfassen des zeitlichen Verlaufes des Wertes des wenigstens einen Reifenschädigungsparameters und
    - Bestimmen der Reifenschädigungskenngröße,

    **dadurch gekennzeichnet, dass**
    das Diagnosemodell (88) wenigstens einen der Fahrzeugeinstellparameter Sturz oder Spur enthält,
    der wenigstens eine Reifenschädigungsparameter die im Bereich des Übergangs zwischen Seitenwand und Lauffläche des Reifens im Reifenmaterial herrschende Temperatur ist und
    das Reifenschädigungsmodell (94) ein Zeitintergral der im Reifenmaterial herrschenden Temperatur enthält.

2.  Verfahren nach Anspruch 1, **dadurch gekennzeichnet, dass** der Wert wenigstens eines Reifenschädigungsparameters errechnet und von einem Sensor (34) erfasst wird und das Reifenschädigungsmodell bei einer Abweichung zwischen dem errechneten und dem gemessenen Wert adaptiert wird.

3.  Verfahren zur Überwachung wenigstens eines der Fahrzeugeinstellparameter Sturz oder Spur, enthaltend folgende Schritte:

    - Bereitstellen eines fahrzeug- und reifenspezifischen Diagnosemodells (88), mit Hilfe dessen aus dem Wert wenigstens eines für die Schädigung eines Fahrzeugreifens relevanten Reifenschädigungsparameters und dem Wert wenigstens eines Fahrzeugbetriebsparameters wenigstens einer der Werte Sturz oder Spur berechenbar ist,
    - Erfassen der Werte des wenigstens einen Reifenschädigungsparameters und des Wertes des wenigstens einen Fahrzeugbetriebsparameters und
    - Errechnen wenigstens eines der Werte Sturz oder Spur aus den erfassten Werten.

4.  Verfahren nach Anspruch 3, wobei der zeitliche Verlauf des wenigstens einen Reifenschädigungsparameters erfasst wird und in das Diagnosemodell (88) eingeht.

5.  Verfahren nach Anspruch 4, wobei der Wert wenigstens eines Reifenschädigungsparameters die im Bereich des Übergangs zwischen Seitenwand und Lauffläche des Reifens im Reifenmaterial herrschende Temperatur ist.

6.  Verfahren nach Anspruch 4 oder 5, wobei der Wert wenigstens eines Fahrzeugeinstellparameters errechnet und von einem Sensor erfasst wird und das Diagnosemodell bei einer Abweichung zwischen errechnetem und gemessenen Wert adaptiert wird.

7.  Verfahren nach einem der Ansprüche 1 bis 6, wobei der Wert wenigstens eines Umgebungsparameters erfasst wird und in das Diagnosemodell eingeht.

8. Verfahren zum Erzeugen eines Fahrzeug-Reifen-Interaktionsmodells (88), enthaltend folgende Schritte:

- Errechnen eines reifen- und fahrzeugspezifischen virtuellen Kennfeldes (74), das wenigstens einen für eine Reifenschädigung relevanten Parameter, nämlich die Reifentemperatur, insbesondere die im Bereich des Übergangs zwischen Seitenwand und Lauffläche des Reifens im Reifenmaterial herrschende Temperatur, in Abhängigkeit von wenigstens einem Fahrzeugeinstellparameter, nämlich Sturz oder Spur, Fahrzeugbetriebsparametern und Reifeneinstellparameter enthält,
- versuchstechnische Ermittlung eines reifen- und fahrzeugspezifischen realen Kennfeldes (86), das wenigstens einen für eine Reifenschädigung relevanten Parameter, nämlich die Reifentemperatur, insbesondere die im Bereich des Übergangs zwischen Seitenwand und Lauffläche des Reifens im Reifenmaterial herrschende Temperatur, in Abhängigkeit von jeweils wenigstens einem Fahrzeugeinstellparameter, nämlich Sturz oder Spur, Fahrzeugbetriebsparameter und Reifeneinstellparameter enthält,
und
- Zusammenfügen des virtuellen und des realen Kennfeldes zu einem Fahrzeug-Reifen-Interaktionsmodell (88).

9. Verfahren nach Anspruch 8, wobei die Reifentemperatur aus einem Verlustleistungsmodell (68) berechnet wird, das die über den Längsschlupf, den Schräglauf, die vertikale Verformung, den Rollwiderstand und die dynamische Spuränderung umgesetzten Leistungen enthält.

10. Verfahren zum Erzeugen eines Fahrzeug-Reifen-Zuverlässigkeitskennfeldes (94), enthaltend folgende Schritte:

- Bestimmen eines reifen- und fahrzeugspezifischen Kennfeldes (78), das wenigstens einen für eine Reifenschädigung relevanten Parameter, nämlich die Reifentemperatur, insbesondere die im Bereich des Übergangs zwischen Seitenwand und Lauffläche des Reifens im Reifenmaterial herrschende Temperatur, in Abhängigkeit von jeweils wenigstens einem Fahrzeugeinstellparameter, Fahrzeugbetriebsparameter und Reifeneinstellparameter enthält,
- versuchstechnische Ermittlung (92) der Lebensdauer des Reifens für verschiedene Werte des wenigstens einen für eine Reifenschädigung relevanten Parameters und
- Erzeugen des Zuverlässigkeitskennfeldes (94) aus dem reifen- und fahrzeugspezifischen Kennfeld und den ermittelten Lebensdauerdaten.

11. Reifendiagnosesystem (50), enthaltend Sensoren (34, 44) zum Erfassen der Werte der in das Fahrzeug- und/oder reifenspezifischen Diagnosemodell eingehenden Betriebsparameter und Fahrzeugeinstellparameter und eine mit den Sensoren verbundene Datenverarbeitungseinrichtung (28) zum Durchführen des Verfahrens nach einem der Ansprüche 1, 2 oder 7 in Verbindung mit einem der Ansprüche 1 oder 2.

12. Fahrzeugdiagnosesystem, enthaltend
ein Diagnosemodell, das Abhängigkeiten zwischen Fahrzeugeinstellparametern, Sturz und/oder Spur, Fahrzeugbetriebsparametern und Reifenbetriebsparametern enthält, und
eine Einrichtung zum Erfassen der Reifenbetriebsparameter und weiterer Parameter, so dass wenigstens Sturz und/oder Spur durch Eingabe der erfassten Reifenbetriebsparameter in das Diagnosemodell bestimmbar sind.

**Claims**

1. Method for monitoring a vehicle tire, including the following steps:

- providing a vehicle- and/or tire-specific diagnostic model (88), by means of which at least one tire deterioration parameter value relevant to a deterioration of the tire is calculable from the values of operating parameters relevant to the operational demands of a vehicle tire;
- providing a tire deterioration model (94), by means of which a tire deterioration characterizing value is ascertainable from the time progression of the value of the at least one tire deterioration parameter;
- detecting the values of the operating parameters;
- determining the value of the at least one tire deterioration parameter;
- detecting the time progression of the value of the at least one tire deterioration parameter value; and

determining the tire deterioration characterizing value,
**characterized in that**

the diagnostic model (88) includes at least one of the vehicle adjustment parameters wheel camber or wheel toe, the at least one tire deterioration parameter is the temperature prevailing in the tire material in the region of the junction between tire-sidewall and tire-tread and

the tire deterioration model (94) includes a time integral of the temperature prevailing in the tire material.

2. Method according to Claim 1, wherein the value of the at least one tire deterioration parameter is calculated, and is detected by a sensor (34), and the tire deterioration model is adapted in the case of a difference between the calculated value and the detected value.

3. Method for monitoring at least one vehicle adjustment parameter wheel camber or wheel toe, including the following steps:

- providing a vehicle- and tire-specific diagnostic model (88), by means of which at least one of the values wheel camber or wheel toe is calculable from the value of at least one tire deterioration parameter relevant to the deterioration of a vehicle tire and the value of at least one vehicle operating parameter;
- detecting the values of the at least one tire deterioration parameter and the value of the at least one vehicle operating parameter; and
- calculating at least one of the values wheel camber and wheel toe from the detected values.

4. Method according to Claim 3, wherein the time progression of the at least one tire deterioration parameter value is detected and included in the diagnostic model (88).

5. Method according to claim 4, wherein the value of at least one tire deterioration parameter is the temperature prevailing in the tire material in the region of the junction between tire sidewall and tire tread.

6. Method according to Claim 4 or 5, wherein the value of at least one vehicle adjustment parameter is calculated, and is detected by a sensor, and the diagnostic model is adapted in the case of a difference between the calculated value and the detected value.

7. Method according to any of Claims 1 to 6, wherein the value of at least one environmental parameter is detected and included in the diagnostic model.

8. Method for generating a vehicle-tire interaction model (88), including the following steps:

- calculating a tire- and vehicle-specific virtual map (74), which includes at least one parameter relative to a tire deterioration, namely the tire temperature, in particular the tire temperature prevailing in the tire material in the region of the junction between tire sidewall and tire tread, as a function of at least one vehicle adjustment parameter, namely wheel camber or wheel toe, vehicle operating parameter and tire adjustment parameter;
- test-based determining a tire- and vehicle-specific real map (86), which includes at least one parameter relevant to a tire deterioration, namely the tire temperature, in particular the tire temperature prevailing in the tire material in the region of the junction between tire sidewall and tire tread, as a function of at least one vehicle adjustment parameter, namely wheel camber or wheel toe, vehicle operating parameter and tire adjustment parameter, respectively; and
- combining the virtual and real maps into a vehicle-tire interaction model (88).

9. Method according to Claim 8, wherein the tire temperature is calculated from a power dissipation model (68) that includes the power converted by the longitudinal slip, the skew, the vertical deformation, the rolling resistance and the dynamic wheel toe change.

10. Method for generating a vehicle-tire reliability map (94), including the following steps:

- determining a tire- and vehicle-specific map (74), which includes at least one parameter relevant to a tire deterioration, namely the tire temperature, in particular the tire temperature prevailing in the tire material in the region of the junction between tire sidewall and tire tread, as a function of at least one vehicle adjustment parameter, vehicle operating parameter and tire adjustment parameter, respectively;
- test-based determining (92) the service life of the tire for different values of the at least one parameter relevant to a tire deterioration; and
- generating the reliability map (94) from the tire- and vehicle-specific map and the determined service life data.

**11.** Tire diagnostic system (50) including sensors (34, 44) for detecting the values of the vehicle operating parameters and vehicle adjustment parameters included in the vehicle- and/or tire-specific diagnostic model and a data processing device (28) connected with the sensors for performing the method according to one of Claims 1, 2 or 7 in combination with one of Claims 1 or 2.

**12.** Vehicle diagnostic system, including
a diagnostic model containing relationships between the vehicle adjustment parameters, wheel camber and/or wheel toe, and vehicle operating parameters, and tire operating parameters, and
a device for detecting the tire operating parameter and further parameters so that at least wheel camber and/or wheel toe are ascertainable by entering the detected tire operating parameters into the diagnostic model.

**Revendications**

**1.** Procédé de contrôle d'un pneu de véhicule, comportant les étapes suivantes :

- préparation d'un modèle de diagnostic (88) spécifique au véhicule et/ou au pneu, au moyen duquel au moins un paramètre de dégradation du pneu, significatif pour une dégradation du pneu, peut être calculé à partir des valeurs de paramètres d'exploitation significatifs pour la sollicitation d'un pneu de véhicule,
- préparation d'un modèle de dégradation du pneu (94), au moyen duquel une grandeur caractéristique de dégradation du pneu peut être déterminée à partir de l'évolution en fonction du temps de la valeur dudit au moins un paramètre de dégradation du pneu,
- enregistrement des valeurs des paramètres d'exploitation,
- détermination de la valeur dudit au moins un paramètre de dégradation du pneu,
- enregistrement de l'évolution en fonction du temps de la valeur dudit au moins un paramètre de dégradation du pneu, et
- détermination de la grandeur caractéristique de dégradation du pneu,

**caractérisé en ce que**
le modèle de diagnostic (88) comporte au moins un des paramètres de réglage du véhicule carrossage ou parallélisme,
ledit au moins un paramètre de dégradation du pneu est la température qui règne dans le matériau du pneu dans la zone de transition entre la paroi latérale et la surface de roulement du pneu, et
le modèle de dégradation du pneu (94) comporte une intégrale de temps de la température qui règne dans le matériau du pneu.

**2.** Procédé selon la revendication 1, **caractérisé en ce que** la valeur d'au moins un paramètre de dégradation du pneu est calculée et est enregistrée par un capteur (34) et le modèle de dégradation du pneu est adapté dans le cas d'une divergence entre la valeur calculée et la valeur mesurée.

**3.** Procédé de contrôle d'au moins un paramètre de réglage du véhicule, à savoir carrossage ou parallélisme, comportant les étapes suivantes :

- préparation d'un modèle de diagnostic (88) spécifique au véhicule et/ou au pneu, au moyen duquel au moins une des valeurs carrossage ou parallélisme peut être calculée à partir de la valeur d'au moins un paramètre de dégradation du pneu, significatif pour une dégradation du pneu, et de la valeur d'au moins un paramètre d'exploitation du véhicule,
- enregistrement des valeurs dudit au moins un paramètre de dégradation du pneu et de la valeur dudit au moins un paramètre d'exploitation du véhicule,
- calcul d'au moins une des valeurs carrossage ou parallélisme à partir des valeurs enregistrées.

**4.** Procédé selon la revendication 3, dans lequel l'évolution en fonction du temps de la valeur dudit au moins un paramètre de dégradation du pneu est enregistrée et est entrée dans le modèle de diagnostic (88).

**5.** Procédé selon la revendication 4, dans lequel la valeur d'au moins un paramètre de dégradation du pneu est la température qui règne dans le matériau du pneu dans la zone de transition entre la paroi latérale et la surface de roulement du pneu.

**6.** Procédé selon la revendication 4 ou 5, dans lequel la valeur d'au moins un paramètre de réglage du véhicule est calculée et est enregistrée par un capteur et le modèle de diagnostic est adapté dans le cas d'une divergence entre la valeur calculée et la valeur mesurée.

**7.** Procédé selon l'une quelconque des revendications 1 à 6, dans lequel la valeur d'au moins un paramètre d'environnement est enregistrée et est entrée dans le modèle de diagnostic.

**8.** Procédé destiné à générer un modèle d'interaction (88) pour les pneus d'un véhicule, comportant les étapes suivantes :

- calcul d'un diagramme caractéristique virtuel (74) spécifique au pneu et au véhicule, qui contient au moins un paramètre significatif d'une dégradation du pneu, à savoir la température du pneu, en particulier la température qui règne dans le matériau du pneu dans la zone de transition entre la paroi latérale et la surface de roulement du pneu, en fonction d'au moins un paramètre de réglage du véhicule, à savoir le carrossage ou le parallélisme, des paramètres d'exploitation du véhicule et des paramètres de réglage du pneu,
- détermination par la technique d'essai d'un diagramme caractéristique réel (86) spécifique au pneu et au véhicule, qui contient au moins un paramètre significatif d'une dégradation du pneu, à savoir la température du pneu, en particulier la température qui règne dans le matériau du pneu dans la zone de transition entre la paroi latérale et la surface de roulement du pneu, en fonction d'au moins un paramètre de réglage du véhicule, à savoir le carrossage ou le parallélisme, des paramètres d'exploitation du véhicule et des paramètres de réglage du pneu, et
- regroupement des diagrammes caractéristiques virtuel et réel pour former un modèle d'interaction pour les pneus d'un véhicule (88).

**9.** Procédé selon la revendication 8, dans lequel la température du pneu est calculée à partir d'un modèle de perte de puissance (68), qui contient les puissances converties par l'intermédiaire du patinage longitudinal, de la dérive, de la déformation verticale, de la résistance au roulement et de la variation dynamique du parallélisme.

**10.** Procédé destiné à générer un diagramme caractéristique de fiabilité (94) des pneus d'un véhicule, comportant les étapes suivantes :

- détermination d'un diagramme caractéristique (78) spécifique au pneu et au véhicule, qui contient au moins un paramètre significatif d'une dégradation du pneu, à savoir la température du pneu, en particulier la température qui règne dans le matériau du pneu dans la zone de transition entre la paroi latérale et la surface de roulement du pneu, en fonction d'au moins un paramètre de réglage du véhicule, des paramètres d'exploitation du véhicule et des paramètres de réglage du pneu,
- détermination (92) par la technique d'essai de la durée de vie du pneu pour différentes valeurs dudit au moins un paramètre significatif d'une dégradation du pneu, et
- création du diagramme caractéristique de fiabilité (94) à partir du diagramme spécifique au pneu et au véhicule et des données de durée de vie déterminées.

**11.** Système de diagnostic des pneus (50), comportant des capteurs (34, 44) destinés à enregistrer les valeurs des paramètres d'exploitation et des paramètres de réglage du véhicule, entrant dans le modèle de diagnostic spécifique au pneu et au véhicule, et une unité de traitement des données (28) reliée aux capteurs et destinée à la mise en oeuvre du procédé selon une des revendications 1, 2 ou 7, en association avec la revendication 1 ou 2.

**12.** Système de diagnostic de véhicule, comportant

- un modèle de diagnostic, qui contient des dépendances entre les paramètres de réglage du véhicule, à savoir le carrossage et/ou le parallélisme, les paramètres d'exploitation du véhicule et les paramètres d'exploitation des pneus, et
- un dispositif destiné à enregistrer les paramètres d'exploitation des pneus et d'autres paramètres, de telle sorte qu'au moins le carrossage et/ou le parallélisme peuvent être déterminés par l'entrée des paramètres d'exploitation des pneus dans le modèle de diagnostic.

FIG. 1

FIG. 2

**FIG. 3**

**Fahrzeugeinstellparameter**
- Sturz
- Spur
- Unwucht

**Fahrzeugbetriebsparameter** *FB*
- Beladung
- Geschwindigkeit
- Raddrehzahl
- Gierrate
- Querbeschleunigung
- Schräglauf
- Lenkwinkel
- Schlupf
- Zeitdauern

⎫ Daten aus CAN bzw. Fahrzeugregelsystemen

**Reifenparameter** *RP*
- Typ
- Größe
- DOT
- Alter / Laufleistung / Laufstreifendicke

**Reifeneinstellparameter** *RE*
- Luftdruck

**Umgebungsparameter** *UP*
- Lufttemperatur
- Radhaustemperatur
- Bodentemperatur
- Sonnenintensität

**Fahrzeugparameter** *FP*
- Radlast
- Achskinematik

→ **Diagnose-Modell-entwicklung** →

**Reifenbetriebsparameter** *RB*
- Luftdruck *LD*
- Temperatur Gürtelkante *TG*
- Temperatur Lauffläche *TL*
- Mittlere Temperatur *TM*
- Wärme-Verlustleistung *WV*
  Dehnung *DE*

**FIG. 4**

**Fahrzeug bezogene Parameter**
- Radlast
- Geschwindigkeit
- Sturz
- Spur
- Raddrehzahl
- Gierrate
- Querbeschleunigung
- Schräglauf
- Lenkwinkel
- Schlupf

⎫ Daten aus CAN bzw. Fahrzeugregelsystemen

**Reifen bezogene Parameter**
- Temperatur
- Drehgeschwindigkeit
- Luftdruck
- ID
- Alter / Laufstrecke
- Wärme-Verlustleistung
- Vorhersage
- Aufbrauchbare Schädigung

32

Datentransfer (z.B. RFID)

**Auswerteeinheit** | Vorhersage

$T_R$

$S_R$

Warnung

Datentransfer (z.B. CAN) 30

28

*FIG 5*

Diagnosesystem `50`

`52`
Warn- und
Meldeeinrichtungen

Direktwarnungen
- Reifentemperatur
- Fahrzeugfehleinstellungen

`28`
Rechen- und
Auswerteeinheit
Analyse der Reifen- und Fahrzeugdaten
mit Speicherung der Historiendaten

`90`

`40`
Betriebs-Datenerfassung
mit Daten-Bussystem

Fahrzeugparameter
Soll-Ist-Vergleich
zur Fehlerfrüherkennung

`88`

`38`
Reifendaten
RB, RE, RP
(Temperaturen, Druck,
Beschleunigungen, Kräfte)

Fahrzeugdaten
FB, UP, FE, FP
(Geschwindigkeit, Sturz,
Schräglauf, Gewichte, Umgebung)

`46`

`88`

`90`

Reifensensorik
mit Transpondersystem
und Datenlogger

Fahrzeugsensorik
Regelsysteme
und Daten-Bussystem

`44`

`36`

Reifentemperaturen
(Luft, Material- "Hot Spots",
z.B. Gürtelkante)

Klimatisierung
(Außentemperaturen, Sonnenstand,
Sonnenintensität)

Raddrehzahl

Bremsregelung
(Raddrehzahl, Schlupf)

`34`

Reifenluftdruck

Fahrdynamikregelung
(Lenkwinkel, Gierrate, Radstellung,
Fahrzeuggeschwindigkeit,
Querbeschleunigung)

`42`

Vibrationen / Beschleunigungen

Motormanagement
(Drehmoment)

Aufstandskraft / Radlast /
Verformungen

23

FIG 6

*90*

28

*70*

| Reifen-Typspezifische Grunddaten Betriebsparameter-Kennfelder | Reifen-Typspezifisches Zuverlässigkeitskennfeld und Lebensdauermodell *94* |

46

| Reifen-Typspezifisches Fahrzeug-Reifen-Interaktionsmodell *88* | Versuchsdurchführung Prüfstand *92* |

| Virtuelle Kennfeldermittlung<br>- Temperatur<br>- Verlustleistung *74* | Reale Kennfeldermittlung<br>- Temperatur<br>- Verlustleistung *86* |

| Umgebungstemperaturmodell Interaktion Reifen-Umgebung (Boden, Luft, Sonnenstrahlung) *42* *72* | Umgebungstemperatur-Normierungsmodell (Boden, Luft, Sonnenstrahlung) *84* |

| Verlustleistungs-Temperatur-Transfer Modell Berechnungsalgorithmus *70* | Temperaturkennfeld Verlustleistungskennfeld *82* |

| Reifen-Verlustleistungsmodell Berechnungsalgorithmus *68* | Reifentemperatur- / Verlustleistungs-Ergebnismatrix *78* |

| Reifen-Kräfte- / Momentenmatrix *66* | Prüfstandsversuch Fahrversuch *76* | Simulation *80* |

| Simulation / FEM-Berechnung *64* | Reifenmuster *62'* | Reifenparameter- RP *62* |

| Reifenparameter RP *62* | Testfahrzeug *60'* | Fahrzeugparameter FE, FP *60* |

| Fahrzeugparameter FE, FP *60* | Versuchsplan Fahrzeugbetriebsparameter FB *58* | Fahrzeugbetriebsparameter FB *58* |

| Fahrzeugbetriebsparameter FB *58* | | |

28

30

32

126

14

10

4

12

16

16

6

6

8

18

8

18

20

22

FIG 7

126

126

126

136

FIG 8

FIG 9

138
140
138
142
138
124
136
10

FIG 10

142
140
10
138
136
138

FIG 11

FIG 12

FIG 13